(19) Europäisches Patentamt
European Patent Office
Office européen des brevets

(11) **EP 3 929 469 B1**

(12) **EUROPÄISCHE PATENTSCHRIFT**

(45) Veröffentlichungstag und Bekanntmachung des Hinweises auf die Patenterteilung:
**12.06.2024 Patentblatt 2024/24**

(21) Anmeldenummer: **21191616.8**

(22) Anmeldetag: **20.03.2014**

(51) Internationale Patentklassifikation (IPC):
**F16H 49/00** *(2006.01)* **B62M 23/00** *(2006.01)*
**B62M 11/14** *(2006.01)* **B62M 6/55** *(2010.01)*
**F16H 25/06** *(2006.01)*

(52) Gemeinsame Patentklassifikation (CPC):
**F16H 49/001; B62M 6/55; B62M 11/145;**
**B62M 23/00;** F16H 2025/066; F16H 2049/003;
F16H 2200/2069

(54) **HARMONISCHES PINRING-GETRIEBE**

HARMONIC PIN RING TRANSMISSION

DÉMULTIPLICATEUR HARMONIQUE À COURONNE DE BROCHES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **20.03.2013 PCT/IB2013/052217**

(43) Veröffentlichungstag der Anmeldung:
**29.12.2021 Patentblatt 2021/52**

(60) Teilanmeldung:
**24175000.9**

(62) Dokumentnummer(n) der früheren Anmeldung(en) nach Art. 76 EPÜ:
**14719358.5 / 2 976 551**

(73) Patentinhaber: **TQ-Systems GmbH**
**82229 Seefeld (DE)**

(72) Erfinder: **ROSSBERGER, Antonius, Georg**
**Sindelsdorf (DE)**

(74) Vertreter: **Schweiger, Martin**
**Patentanwalt**
**Martin Schweiger**
**Erhardtstraße 12**
**80469 München (DE)**

(56) Entgegenhaltungen:
**WO-A1-2014/060974 WO-A1-2014/060975**
**WO-A2-2012/046216**

**Beschreibung**

Die vorliegende Erfindung betrifft ein harmonisches Pinring-Getriebe gemäß Anspruch 1, einen harmonischen Pinring-Antrieb gemäß Anspruch 9 sowie ein Kraftfahrzeug nach Anspruch 11.

Die abhängigen Ansprüche stellen bevorzugte Ausgestaltungen dar.

Die US 2009/0139358 offenbart eine Methode zum Erstellen eines Zahnprofils für einen flachen Harmonic Drive bzw. ein Wellgetriebe mit einer flexiblen inneren Verzahnung und einer starren äußeren Verzahnungen. Ein Zahnform für die innere Verzahnung wird vorgegeben und davon ausgehend ein Profil für die äußere Verzahnung bestimmt.

Die WO 2012/0462126 zeigt in Fig. 52, wenn nur eine Getriebestufe betrachtet wird, einen harmonischen Pin-Ring-Antrieb mit einer Eingangswelle und einer Ausgangswelle, der zwei Außenräder mit Innenverzahnung und ein einziges Innenrad mit Außenverzahnung aufweist, wobei das Innenrad konzentrisch zu dem ersten Außenrad angeordnet ist. Ein Zugmittel erstreckt sich zwischen den zwei Außenrädern und dem Innenrad, wobei das Zugmittel einen in Umfangsrichtung zusammenhängenden Pinring mit Pins, die in axialer Richtung seitlich von dem Pinring abstehen, aufweist. Ein umlaufender Transmitter ist dazu vorgesehen, das Zugmittel von dem Innenrad abzuheben und in die Innenverzahnung der Außenräder zu drücken.

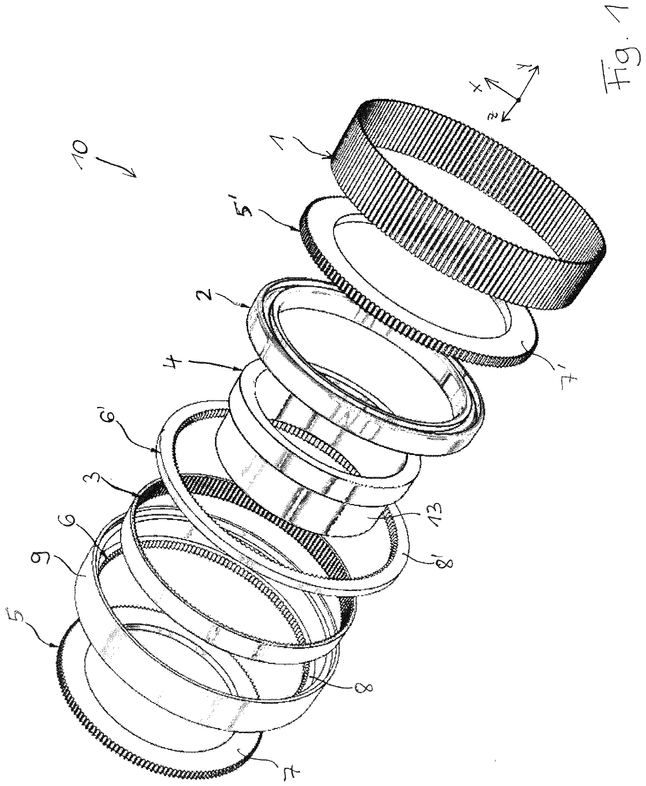

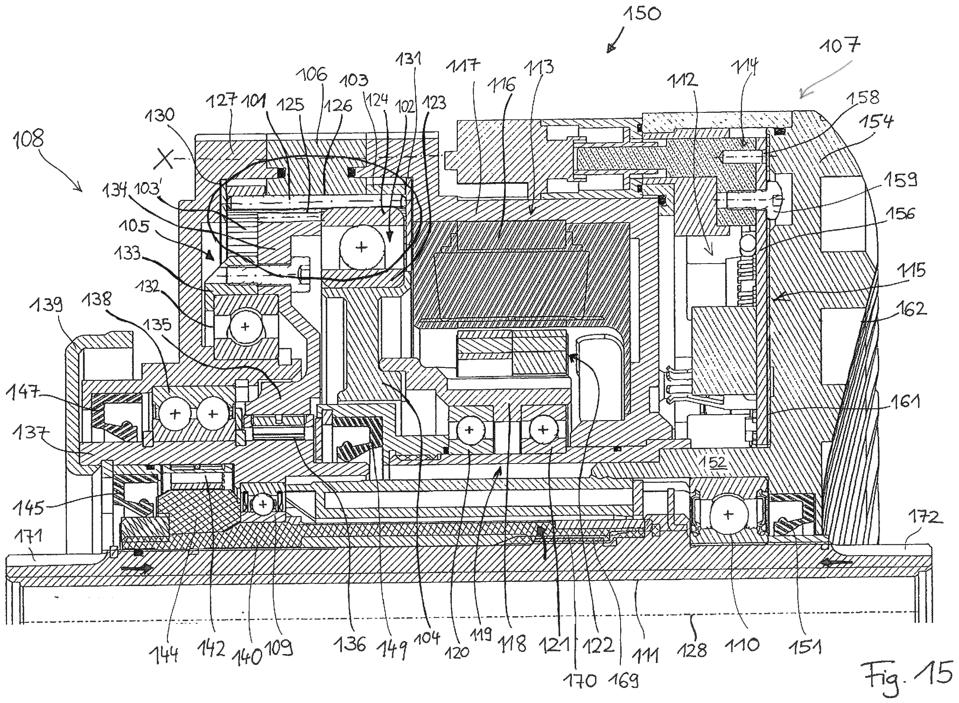

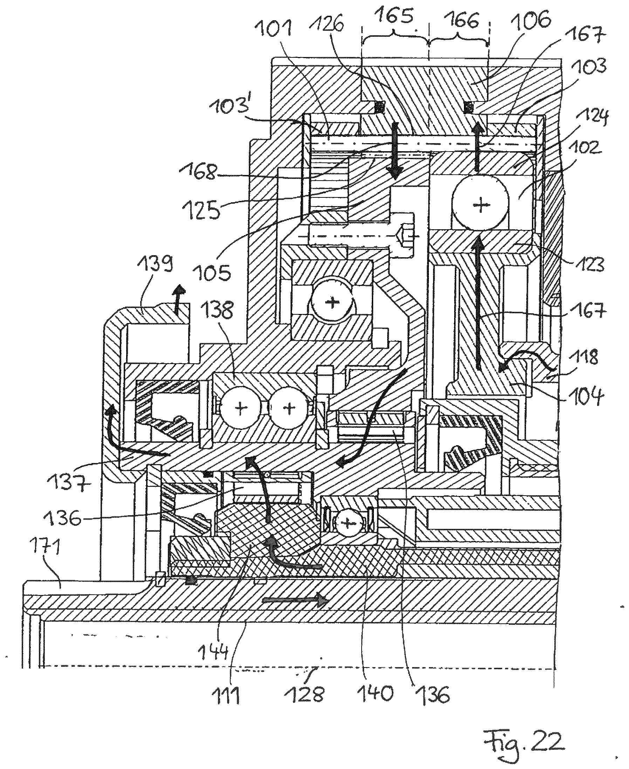

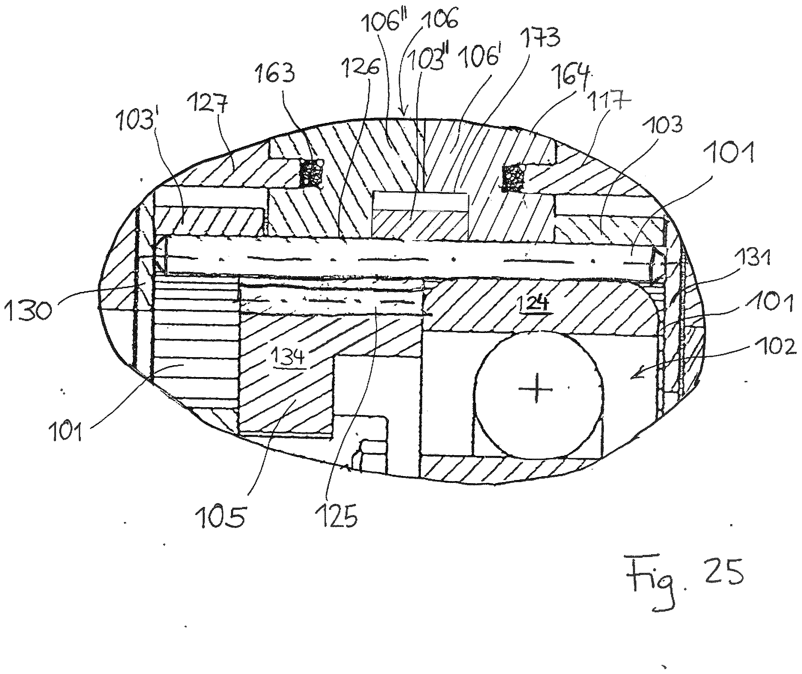

Der Gegenstand der Erfindung wird untenstehend unter Bezugnahme auf die folgenden Figuren weiter erläutert, wobei jedoch keine der Figuren 1-39 ein harmonisches Pinring-Getriebe mit allen Merkmalen des Anspruchs 1 zeigt. Die Figuren 15 und 22 zeigen zwar einen Innenrad-Halter, wie er in Anspruch 1 genannt ist. Die Figuren 15 und 22 zeigen jedoch nur ein Außenrad 106 und nicht, wie in Anspruch 1 genannt, zwei Außenräder. Dahingegen zeigt die Figur 25 ein erstes Außenrad 106' und ein zweites Außenrad 106" aber keinen wie in Anspruch 1 genannten Innenrad-Halter.

Fig. 1   zeigt eine Explosionsansicht eines HPRD Getriebes,

Fig. 2   zeigt eine Aufsicht auf das Getriebe von Fig. 1,

Fig. 3   zeigt einen Querschnitt durch das Getriebe von Fig.1,

Fig. 4   zeigt eine Seitenansicht eines Pin-Rings und eine Ausschnittvergrößerung davon,

Fig. 5   zeigt eine Pin-Laufbahn eines HPRD Getriebes,

Fig. 6   zeigt einen vergrößerten Ausschnitt von Fig. 5,

Fig. 7   zeigt einen Querschnitt durch ein HPRD mit Umlenkrollen,

Fig. 8   zeigt eine Aufsicht auf das HPRD mit Umlenkrollen,

Fig. 9   zeigt eine erste Zahngeometrie einer inneren Verzahnung,

Fig. 10   zeigt eine erste Zahngeometrie einer äußeren Verzahnung,

Fig. 11   zeigt einen Bewegungsablauf der Pins,

Fig. 12   zeigt eine Pin-Trajektorie gemäß einer zweiten Zahngeometrie einer Verzahnung,

Fig. 13   zeigt die zweite Zahngeometrie der Verzahnung, und

Fig. 14   illustriert eine Methode zur Bestimmung eine Getriebegeometrie,

Fig. 15   zeigt einen Querschnitt durch ein harmonisches Pinring-Getriebe gemäß einer ersten Ausführungsform,

Fig. 16   zeigt eine Ausschnittvergrößerung eines in Fig. 15 bezeichneten Ausschnitts,

Fig. 17   zeigt den Verlauf der Schnittebene von Fig. 18 und Fig. 19,

Fig. 18   zeigt eine erste Schnittansicht durch das Getriebe von Fig. 15,

Fig. 19   zeigt eine zweite Schnittansicht durch das Getriebe von Fig. 15,

Fig. 20   zeigt den Verlauf der Schnittebene von Fig. 21,

Fig. 21   zeigt eine dritte Schnittansicht durch das Getriebe von Fig. 15,

Fig. 22   zeigt einen Kraftfluss durch das Getriebe von Fig. 15,

Fig. 23   zeigt einen Ausschnitt einer weiteren Ausgestaltung, die auf dem Getriebe von Fig. 15 basiert,

Fig. 24   zeigt einen Ausschnitt einer weiteren Ausgestaltung, die auf dem Getriebe von Fig. 15 basiert,

Fig. 25   zeigt einen Ausschnitt einer weiteren Ausgestaltung, die auf dem Getriebe von Fig. 15 basiert,

Fig. 26   zeigt eine Querschnittsansicht eines harmonischen Pinring-Getriebes,

Fig. 27   zeigt eine Explosionsansicht eines Reduktionsgetriebe-Bereichs des harmonischen Pinring-Getriebes,

Fig. 28   zeigt eine Querschnittsansicht einer Rotor-Baugruppe des harmonischen Pinring-Getriebes,

Fig. 29   zeigt eine Schnittzeichnung des ReduktionsgetriebeBereichs von Fig. 27,

Fig. 30   zeigt eine Explosionsansicht eines inneren Bereichs des harmonischen Pinring-Getriebe, und

Fig. 31   zeigt eine Querschnittsansicht eines weiteren harmonischen Pinring-Getriebes mit einem Bauraum für ein Schaltgetriebe,

Fig. 32   zeigt das harmonische Pinring-Getriebe von Fig. 31 mit einem Planetengetriebe mit angetriebenem Sonnenrad und abgetriebenem Hohlrad,

Fig. 33   zeigt das harmonische Pinring-Getriebe von Fig. 31 mit einem Planetengetriebe mit angetriebenem Sonnenrad und abgetriebenem Planetenträger,

Fig. 34    zeigt das harmonische Pinring-Getriebe von Fig. 31 mit einem Planetengetriebe mit angetriebenem Hohlrad und abgetriebenem Sonnenrad,

Fig. 35    zeigt das harmonische Pinring-Getriebe von Fig. 31 mit einem Planetengetriebe mit angetriebenem Hohlrad und abgetriebenem Planetenträger,

Fig. 36    zeigt das harmonische Pinring-Getriebe von Fig. 31 mit einem Planetengetriebe mit angetriebenem Planetenträger und abgetriebenem Sonnenrad,

Fig. 37    zeigt das harmonische Pinring-Getriebe von Fig. 31 mit einem Planetengetriebe mit angetriebenem Planetenträger abgetriebenem Hohlrad,

Fig. 38    zeigt das harmonische Pinring-Getriebe von Fig. 31 mit einem Planetengetriebe und einer Kettenschaltung, und

Fig. 39    zeigt ein weiteres harmonisches Pinring-Getriebe mit einem Ziehkeil-Getriebe.

Ein Transmitter, der ein Zugmittel in ein Außenrad bzw. Außenring oder Innenrad bzw. Innenring rakelt, kann gemäß der vorliegenden Beschreibung beispielsweise durch einen Flansch eines Rotors oder auch durch ein Paar von Umlenkrollen verwirklicht sein. Dem Außenrad entsprechen ein oder mehrere Ringe bzw. Scheiben mit einer als Innenverzahnung ausgeführten äußeren Verzahnung. Dem Innenrad können ein oder mehrere Ringe bzw. Scheiben mit einer als Außenverzahnung ausgeführten inneren Verzahnung entsprechen und dem Zugmittel entspricht ein Pinring entsprechen.

Im Folgenden ist mit "Antriebsseite" die Seite gemeint, von der aus der Rotor 13 angetrieben wird und mit "Abtriebsseite" die der Antriebsseite gegenüberliegende Seite.

Figur 1 zeigt einen Harmonic Pin Ring Drive (HPRD) 10. Der HPRD weist einen Rotor 13 auf der über ein hier nicht gezeigtes Kugellager auf einem Gehäuse abgestützt ist. Ein Außenring 8 eines zylindrisches Gehäuseteil 9, das konzentrisch außerhalb des Rotors 13 angeordnet ist, weist eine erste als Innenverzahnung ausgeformte äußere Verzahnung 6 auf einer ersten Seite auf. Eine zweite als Innenverzahnung ausgeformte äußere Verzahnung 6' ist auf einem zweiten Außenring ausgeformt, der auf einer der ersten Seite gegenüberliegenden Seite in das zylindrische Gehäuseteil 9 eingesetzt ist.

Eine als Außenverzahnung ausgeführte erste innere Verzahnung 5 ist auf einer Peripherie eines Innenrings 7 ausgeformt und konzentrisch innerhalb der ersten äußern Verzahnung 6 angeordnet. In ähnlicher Weise ist eine als Außenverzahnung ausgeführte zweite innere Verzahnung 5' auf einer Peripherie eines zweiten Innenrings 7' ausgeformt und konzentrisch innerhalb der zweiten äußeren Verzahnung 6' angeordnet

Die innere Verzahnung 5, 5' und die äußere Verzahnung 6, 6' sind konzentrisch zu einer Getriebemittelachse angeordnet, wobei die innere Verzahnung 5, 5' um die Getriebemittelachse rotierbar ist. In anderen Ausführungsbeispielen kann die äußere Verzahnung 6, 6' oder auch die äußere und die innere Verzahnung um die Getriebemittelachse rotierbar sein, je nachdem über welche Verzahnung der Abtrieb oder, bei einer Übersetzung, der Antrieb erfolgt.

Ein flexibles Dünnring-Kugellager 2 ist auf einem speziell ausgeformten Flansch 4 des Rotors 13 aufgespannt. Der Flansch kann beispielsweise als Oval oder als sinusüberlagerte Kreisform ausgeformt sein. Ein flexibler Pin-Haltering 3 ist zwischen dem flexiblen Dünnring-Kugellager 2 und der äußeren Verzahnung 6, 6' angeordnet. Der flexible Pin-Haltering 3 weist an einer Innenseite Rillen zur Aufnahme von Pins 1 auf, die auf dem Pin-Haltering 3 in gleichmäßigen Abständen angeordnet und durch den Pin-Haltering 3 starr gehalten sind.

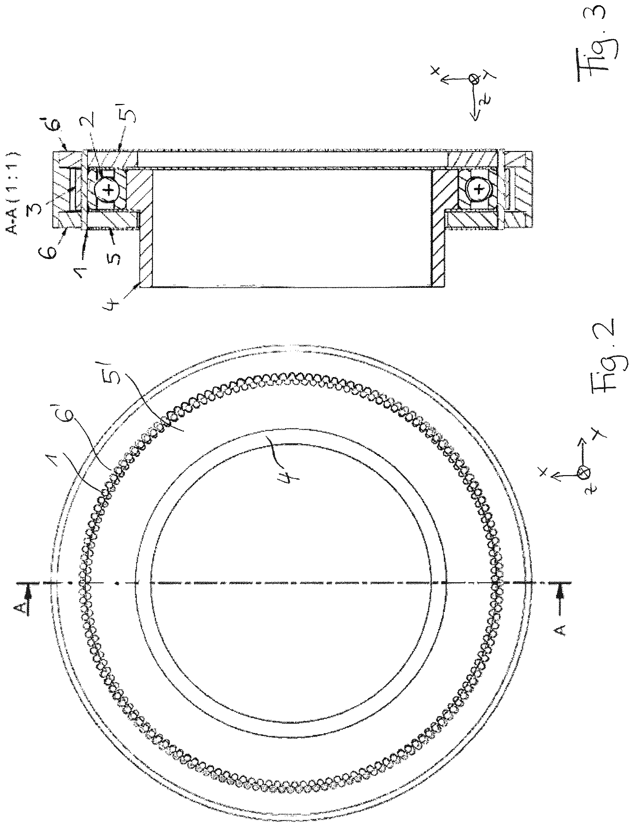

Fig. 2 zeigt eine Aufsicht auf das HPRD 10 von einer Abtriebsseite her und Fig. 3 zeigt einen Querschnitt durch den HPRD 10 entlang der Querschnittline A-A.

Die erste innere Verzahnung 5 ist durch ein Kugellager auf dem Rotor 13 abgestützt, dass der Einfachheit halber in Fig. 2 und 3 nicht gezeigt ist. Die zweite innere Verzahnung 5' ist an hier ebenfalls nicht gezeigte Abtriebsachse befestigt, die nach außen über Kugellager abgestützt ist. Die äußere Verzahnung 6, 6' ist stationär an einem hier nicht gezeigten Gehäuse befestigt.

Gemäß einer anderen Ausführungsform ist die innere Verzahnung 5, 5' stationär während die äußere Verzahnung 6, 6' einen Abtrieb bildet. Gemäß einer weiteren Ausführungsform bilden sowohl die innere Verzahnung 5, 5' als auch die äußere Verzahnung 6, 6' je einen Abtrieb.

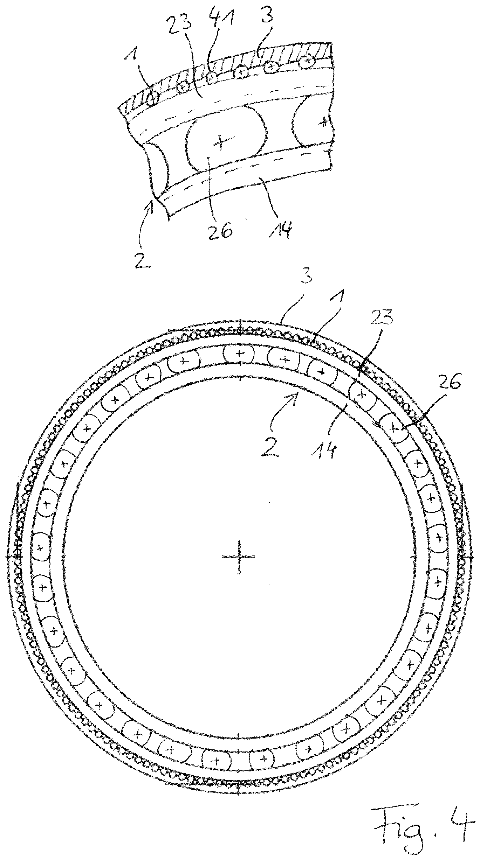

Figur 4 zeigt das flexible Kugellager 2 und den Pin-Haltering 3 mit den Pins 1. Der Pin-Haltering zusammen mit den Pins 1 wird auch als Pin-Ring bezeichnet. Das flexible Dünnring-Kugellager weist einen flexiblen Innenring 14, einen flexiblen Außenring 23 und dazwischen angeordnete Kugeln 26 auf.

Die Pins 1 sind in Aufnahmerillen 41 des Pin-Halterings 3 eingesetzt und werden durch den Anpressdruck des Pin-Halterings 3 gegen das Dünnring-Kugellager 2 festgehalten. Ein manueller Zusammenbau kann zum Beispiel so erfolgen, dass zuerst der Pin-Haltering um das Dünnring-Kugellager 2 herumgelegt wird. Anschließend werden an weit auseinanderliegenden Positionen Pins 1 eingesteckt, so dass der Abstand zwischen Dünnring-Kugellager 2 und Pin-Haltering 3 definiert wird. Anschließend werden die restlichen Pins in die Zwischenräume eingefüllt.

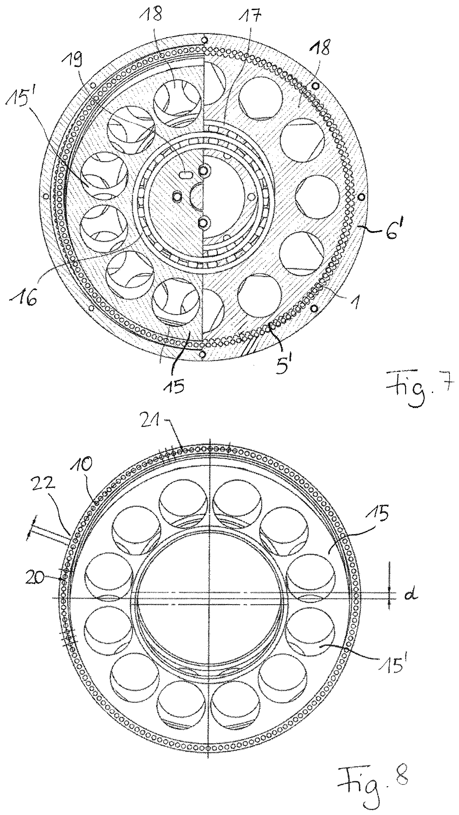

Die Figuren 7 und 8 illustrieren eine Pin-Laufbahn 10 und daraus abgeleitete Beziehungen. Von der Pin-Laufbahn 10 zu unterscheiden ist die Pintrajektorie, die die Bewegung eines einzelnen Pins in einem vorher festgelegten Bezugssystem bezeichnet. Für ein mit dem Rotor 4 mitrotierendes Bezugssystem verläuft die Pintrajektorie entlang der Pin-Laufbahn 10. In den Figuren 7 und 8 sind aus Gründen der Übersichtlichkeit die Zähnungen nicht gezeigt.

Legt man eine Bahn durch die Mittelachsen aller Pins (2), entsteht die Pin-Laufbahn 10. Diese Bahn besitzt rechtwinklig versetzt eine kleine Achse 11 der Länge 2b und eine große Achse 12 der Länge 2a. Bei einer Ellipsenform des Transmitters ist a die Länge der kleinen Halbachse und b die Länge der großen Halbachse der Ellipse.

Die kleine Achse und die große Achse bilden die Basis der Teilkreise der Verzahnungen 5, 5' und 6, 6', wobei die kleine Achse einem Durchmesser eines Teilkreises der inneren Verzahnung 5, 5' und die große Achse einem Durchmesser eines Teilkreises der äußeren Verzahnung 6 entspricht. Bei dem HPRD verläuft der Teilkreis einer Zähnung durch die Flankenlinien, die die Zahnflanken von dem Zahngrund abgrenzen. Unter Annahme bestimmter Zahnformen der Verzahnungen 5, 5' und 6, 6' lässt sich nun die Getriebefunktion abbilden.

Hält man beispielsweise die Innenverzahnung 5, 5' statisch und dreht den Rotor 13, so entsteht eine Wellenbewegung der Anordnung der Pins 1. Daraus resultiert eine Relativbewegung der äußeren Verzahnung 6, 6', welche sich in gleicher Drehrichtung relativ zu dem Rotor 13 untersetzt dreht. Hält man die äußere Verzahnung 6, 6' statisch, dreht sich die innere Verzahnung 5, 5' entgegengesetzt und untersetzt zum Rotor 13.

Die Anzahl aller Pins 1 muss um zwei mehr als Anzahl der Zähne der inneren Verzahnung 5, 5', bzw. um zwei weniger als die Anzahl der Zähne der äußeren Verzahnung 6, 6' sein. Die Zahndifferenz der Verzahnungen 5, 5' und 6, 6' ist somit vier. Grundsätzlich wären auch Zahndifferenzen eines Vielfachen von vier möglich.

Im den folgenden Gleichungen (1) - (3) bezeichnet R die Umlaufperiode des Rotors 13, F die Umlaufperiode des Flexabtriebs 7, A die Umlaufperiode des Außenrads, I die Umlaufperiode des Innenrads, Zi die Anzahl der Zähne der Innenverzahnung 5, 5', Za die Anzahl der Zähne der äußeren Verzahnung 6, 6'. Gemäß der Gleichungen (1) - (3) sich die Drehzahluntersetzungen zwischen den einzelnen Komponenten wie folgt zusammen:

Wenn das Innenrad stationär gehalten wird, gilt

$$A/R = Za/(Za-Zi) \text{ bzw. } F/R = 2*(Za/(Za-Zi)) \qquad (1)$$

Hierbei drehen sich alle Elemente gleichläufig.

Wenn das Außenrad stationär gehalten wird, gilt

$$I/R = Zi/(Za-Zi) \text{ bzw. } F/R = 2*(Zi/(Za-Zi)) \qquad (2)$$

Hierbei drehen sich das Innenrad und der Flexring gegenläufig zum Rotor.

Wenn der Flexring stationär gehalten wird, gilt

$$A/R = 2*(Za/(Za-Zi)) \quad \text{bzw.} \quad I/R = 2*(Zi/(Za-Zi)) (3)$$

Hierbei drehen sich das Innenrad gegenläufig und das Außenrad gleichläufig zum Rotor.

Im Folgenden nun eine Beispielberechnung zu den möglichen Untersetzungsstufen, wobei in diesem Fall der Rotor 13 immer die Eingangsdrehzahl vorgibt. Die Zähnezahl der Innenverzahnung sei 156 und die Zähnezahl der Außenverzahnung sei 160, woraus sich die Anzahl der Pins zu 158 ergibt.

Wenn das Innenrad stationär gehalten wird, gilt

$$A/R = 160/(160-156) = 40 \text{ bzw. } F/R = 2*(160/(160-156)) = 80$$

Wenn das Außenrad stationär gehalten wird, gilt

$$I/R = 156/(160-156) = 39 \text{ bzw. } F/R = 2*(156/(160-156)) = 78$$

Wenn der Flexring stationär gehalten wird, gilt A / R = 2*(160 / (160-156)) = 80 bzw. I / R = 2*(156 / (160-156)) = 78

Es gibt verschiedene Möglichkeiten, die Pin-Laufbahn zu definieren. Grundsätzlich besitzt jede Pin-Laufbahn, wie oben beschrieben, jeweils rechtwinklig versetzt eine kleine Achse x und eine große Achse y, deren Verhältnis dem der Zähnezahlen der Verzahnungen 5, 5' und 6, 6' entspricht.

$$\text{Somit gilt} \quad x/y = Zi/Za$$

Des Weiteren muss die Teilung der in den Pin-Haltering 3 eingesetzten Anordnung der Pins 1 der Teilung der Verzahnungen 5, 5' und 6, 6' entsprechen. Die Pin-Laufbahn ist somit auch über ihre Bogenlänge definiert. Für die Bogenlänge s jeder beliebigen Pin-Laufbahn gilt:

$$s = \text{Anzahl Pins 1 * Teilung}$$

Der Umfang der Pin-Laufbahn abzüglich des Umfangs eines Pins 1 muss also exakt dem Umfang des Kugellagers 2 entsprechen.

Im Folgenden werden drei Laufbahnvarianten dargestellt:

1. Die Elliptische Laufbahn wird durch ihre beiden Halbachsen definiert, wobei die kleine Halbachse dem Teilkreisradius der Innenverzahnung 5, 5' und die große Halbachse dem Teilkreisradius der Außenverzahnung 6, 6' entspricht

2. Die sinusüberlagerte Kreisform ist der elliptischen Laufbahn sehr ähnlich und unterscheidet sich bei kleinen Achsunterschieden nur äußerst gering von dieser. Sie ist folgendermaßen definiert: Die Mittelachse eines kleinen Kreises mit Durchmesser gemäß dem halben Wert der Differenz aus große Achse minus kleine Achse rotiert auf der großen Kreisbahn des Mittelkreises zwischen den beiden Teilkreisen der Verzahnungen 5, 5' und 6, 6' und dreht sich dabei während eines Umlaufs um die Getriebemittelachse zweimal um seine eigene Achse. Projiziert man einen Punkt des kleinen Kreises und leitet daraus eine Bahn ab, entsteht die sinusüberlagerte Kreis-Form.

3. Die Doppelexzenter-Laufbahn ist eine Sonderform, die beispielsweise eingesetzt werden kann, wenn ein elastisches Verformen des Kugellagers 2 unerwünscht oder aufgrund eines zu großen Unterschiedes der beiden Achsen der Pin-Laufbahn nicht mehr möglich ist. In diesem Fall wird die Anordnung der Pins 1 über zwei Umlenkrollen vom Teilkreis der Innenverzahnung 5, 5' in den Teilkreis der Außenverzahnung 6, 6' gelenkt. Die Drehachsen der beiden Umlenkrollen befinden sich bezüglich einer gedachten Ellipse symmetrisch zur kleinen Achse auf der großen Achse.

Die Figuren 7 und 8 zeigen eine Aufsicht auf zwei Ausführungsformen eines HPRD mit Umlenkrollen 15, 15'. In Figur 7 ist die Schnittebene in der rechten Hälfte nach hinten versetzt, so dass die Verzahnungen 5', 6' sichtbar werden.

In Fig. 8 ist weiterhin ein Kugellager 16 gezeigt, auf dem die Umlenkrolle 15 gelagert ist und ein Kugellager 17, auf dem eine Scheibe 18 gelagert ist, die die Innenverzahnung 5 aufweist. Weiterhin sind länglich ausgeformte Stellschlitze 19 gezeigt. Durch ein Verschieben entlang der Stellschlitze 19 können die Umlenkrollen 15, 15' gespannt werden.

An eine, inneren Berührbereich 20 liegt die Pinlaufbahn 10 an einem Teilkreis der inneren Verzahnung 5 an und an einem äußeren Berührbereich liegt die Pinlaufbahn 10 an einem Teilkreis der äußeren Verzahnung 6 an. In einem Zwischenbereich 22 ist die Pinlaufbahn 10 annähernd gerade. Insgesamt gibt es zwei innere Berührbereiche 20, zwei äußere Berührbereiche 21 und vier Zwischenbereiche, so dass sich die Pinlaufbahn aus vier kreisabschnittsförmigen und vier geraden Bereichen zusammensetzt. Diese Pinlaufbahn 10 wird auch als Doppelexzenter-Pinlaufbahn 10 bezeichnet.

Die Umlenkrollen 15, 15' sind um eine Drehachse durch ihren Mittelpunkt drehbar gelagert. Das Lager der Umlenkrollen nimmt an Stelle des oben beschriebenen flexiblen Kugellagers den Schlupf des Pinrings gegenüber dem Rotor 13 auf. Die Drehachsen der Umlenkrollen 15, 15' sind exzentrisch zur Mittelachse angeordnet. Der exzentrische Versatz d ist in Figur 8 gezeigt.

Es ist vorteilhaft, den Radius der Umlenkrollen möglichst groß zu wählen, um eine große Kontaktfläche zum Pinring und damit eine gleichmäßige Kraftverteilung zu erreichen. Die Umlenkrollen können flach gebaut sein und Aussparungen aufweisen, um das Gewicht der Umlenkrollen gering zu halten.

Statt der Umlenkrollen können auch zwei Rakel mit Rollen an der Oberfläche der Rakel verwendet werden, wobei das Rakel starr an dem Rotor 13 befestigt ist. Insbesondere kann das Rakel so geformt sein, dass sich eine Berührfläche zwischen Rakel und Pinring über mehrere Pins erstreckt.

Da die Kraftübertragung beim HPRD von Pins 2 mit kreisförmigen Querschnitten übernommen wird und sich diese bei der Bewegung auf der durch den Rotorflansch 4 bestimmten Umlaufbahn geringfügig um ihre Mittelachse drehen, bleibt der Abstand zwischen der tangential anliegenden Fläche am jeweiligem Zahn der Verzahnungen 5, 5' und 6, 6' und der Drehachse des jeweiligen Pins 1 immer konstant.

Somit ist es möglich, die Zahnform unabhängig von der gewählten Pin-Laufbahn so zu konstruieren bzw. zu berechnen, dass alle Pins 1 ständig im Eingriff eines Zahnes mindestens einer der Verzahnungen 5, 5' und 6, 6' sind und das gesamte Drehmoment auf alle Pins 2 verteilt werden kann. Aufgrund dieser Tatsache ist die Flächenpressung an allen Pins 2 und den Verzahnungen 5 und 6 sehr gering. Dies ermöglicht wiederum hohe Wirkungsgrade, geringen Verschleiß, eine sehr große Leistungsdichte und damit eine äußerst kompakte Bauform.

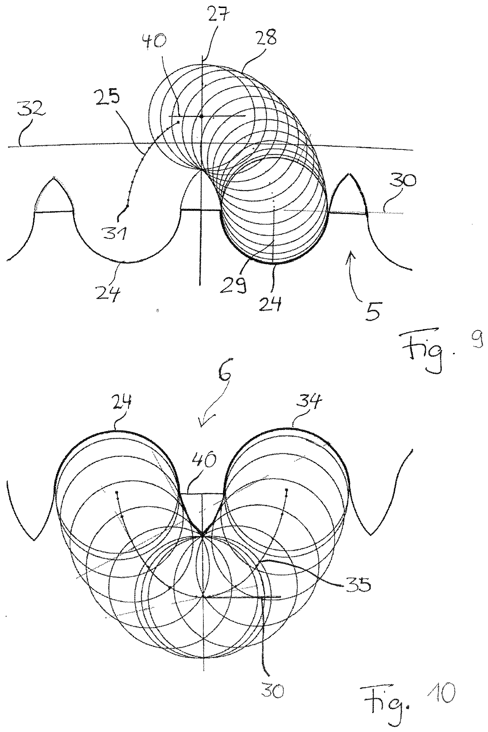

Die Figuren 9 und 10 zeigen eine Ausgestaltung der Zahngeometrien für die innere Verzahnung und die äußere Verzahnung.

Die Zahngeometrie ergibt sich aus dem Bewegungsablauf eines Pins 1 in einem Bezugssystem, in dem die Verzahnung in Ruhe ist. Die Zahngeometrie ist die um den Radiuswert des Pins 1 versetzte Kontur 25 des ablaufenden Mittelpunktes des Pins 1, welche, hier am Beispiel der Innenverzahnung 5, 5', im Mittelpunkt eines Zahngrundes 24, startet. Der Mittelpunkt eines Zahngrundes 24 liegt im Schnittpunkt der Symmetrieachse 29 eines Zahngrundes 24 mit dem Teilkreis 30 der inneren Verzahnung 5.

Die Pintrajektorie 25 schneidet auf halbem Wege genau den Teilkreis 40 der äußeren Verzahnung 6, 6' und zugleich die Symmetrielinie 27 des Zahnes, und verläuft wiederum symmetrisch zum bisherigen Verlauf zum Endpunkt, dem Mittelpunkt des benachbarten Zahngrundes 24. Die Zahnform ist durch die innere Hüllkurve des Pinprofils 28 bestimmt. Des Weiteren ist in Fig. 9 ein Kopfkreis 32 der äußeren Verzahnung 6 eingezeichnet, um den Abstand der Zähne zu veranschaulichen.

Figur 10 zeigt die analoge Gestaltung der Zähne der Außenradverzahnung 6. Elemente, die denen in Figur 9 entsprechen, sind mit einer um 10 verschobenen Bezugsziffer gekennzeichnet. Beispielsweise ist die Kontur mit der Bezugsziffer 35 gekennzeichnet.

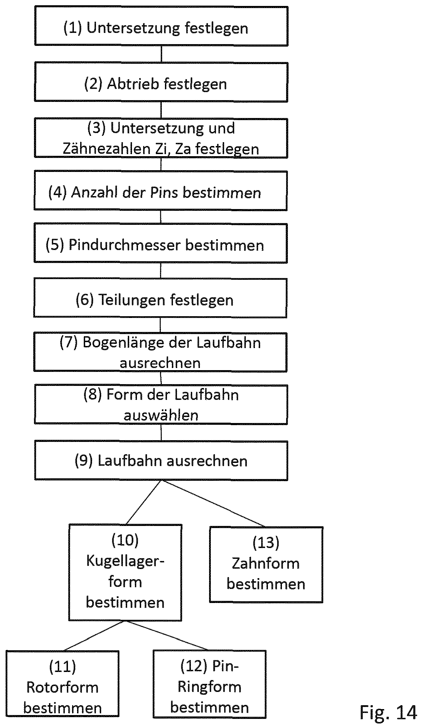

Ein Entwurf eines HPRD weist die folgenden Schritte auf, die auch in Fig. 14 gezeigt sind.

1) Festlegung der gewünschten Untersetzung, zum Beispiel 1:36

2) Festlegung der Komponente, welche die Ausgangsdrehzahl erhalten soll

- Auswahl der Außenverzahnung 6, 6'. Es können in diesem Fall wahlweise eine der Verzahnungen 5, 5' oder 6, 6'
  - bei einem HPRD-MULTI auch der Flexabtrieb 7 - sein.

3) Bestimmung der Zähnezahlen der inneren Verzahnung 5, 5' und der äußeren Verzahnung 6, 6'

- Ergebnis gemäß der Untersetzungsformeln:
  $Z_i = 140$ und $Z_a = 144$

4) Bestimmung der Anzahl der Pins 1

- Ergebnis gemäß der Untersetzungsformeln : 142 Pins 1

5) Festlegung des Durchmessers der Pins 1

- Beispiel Ø2mm

Die Auslegung des Pin-Durchmessers ist maßgebend für die übertragbaren Drehmomente, welche im Gegenzug von der Auswahl der Materialien und Verzahnungsbreiten abhängig sind. Je nach Anforderungen müssen die Dimensionen aller Komponenten im Getriebe ausgelegt und aufeinander abgestimmt werden

6) Festlegung der Teilung der Verzahnungen 5, 5' und 6, 6' sowie des Pin-Halterings

- Beispiel: 2,8mm.

Die Teilung in einem HPRD ist üblicherweise Durchmesser des Pins 1 mal Teilungs-Faktor 1,4 $\pm$ 7%, also hier 2mm x 1,4 = 2,8mm. Anzahl und Durchmesser der Pins 1 ergeben in Abhängigkeit der gewählten Teilung eine definierte Länge der Pin-Laufbahn, welche genau zum äußeren Umfang des Kugellagers 2 passen muss.

7) Berechnung der Bogenlänge s der Laufbahn der Pin-Anordnung 1 wie weiter oben beschrieben.

- Berechnung: s = Anzahl Pins (1) * Teilung, s=142 * 2,8 mm = 397,6 mm

8) Festlegung der Laufbahnvariante der Pin-Anordnung 1

- Beispiel: Ellipse

9) Berechnung der Laufbahngeometrie der Pin-Anordnung 1

- Hier ist eine Ellipsengeometrie zu berechnen, deren Halbachsenverhältnis gemäß dem Verhältnis der Zähnezahlen der Verzahnungen 5, 5' und 6, 6' entspricht, und deren Umfang gleich der in 7) errechneten Bogenlänge s = 397,6 mm ist.

Bestimmung der Geometrie der Komponenten. Nach Definition der Laufbahngeometrie lässt sich nun die Geometrie aller weiteren Teile ableiten

10) Geometrie des Kugellagers 2

- Der Umfang des Kugellagers 2 entspricht der inneren Hüllkurve der gleichmäßig auf der errechneten Laufbahngeometrie angeordneten Pins 1. Die weitere Auslegung des Kugellagers 2, insbesondere in Bezug auf Wandstärken und Materialauswahl von Lagerinnen- und Außenring muss so geschehen, dass diese hinsichtlich Elastizität und Wechselbelastung über die geforderte Laufzeit ausreichend stabil sind.

11) Geometrie des Rotors 13

- Die Ausgangsgeometrie am Rotorflansch 4 ist die entsprechend nach innen versetzte Geometrie abhängig vom Querschnitt des Kugellagers 2 und des Durchmessers des Pins - hier beispielsweise die berechnete elliptische Laufbahngeometrie, wobei den Werten der Halbachsen jeweils der Durchmesser der Pins 1 und die Hälfte der Differenz von Außen- und Innendurchmesser des Kugellagers 1 abzuziehen sind.

12) Geometrie des Pin-Halterings 3

- Der Pin-Haltering 3 muss so konstruiert werden, dass er alle Pins 1 ständig tangential am Außenring des Kugellagers 2 und diese gleichmäßig verteilt hält. Die weitere Auslegung des Pin-Halterings 3, insbesondere in Bezug auf Wandstärken und Materialauswahl muss so geschehen, dass diese hinsichtlich Elastizität und Wechselbelastung über die geforderte Laufzeit ausreichend stabil sind.

13) Geometrie der Verzahnungen 5, 5' und 6, 6'

- Die nominalen Zahnformen der Verzahnungen 5, 5' und 6, 6' ergeben sich aus den entsprechenden Hüllkurven nach Abrollen der Pins 1 gemäß obenstehendem Schritt 7).

Aus der Pintrajektorie des einzelnen Pins kann die Zahnform mit Hilfe des Hauptnormalenvektors des begleitenden Dreibeins wie folgt bestimmt werden. Ein Tangentialvektor an die Bahn ist gegeben durch:

$$\frac{d\vec{x}}{ds} = \frac{d\vec{x}}{d\varphi} * \frac{d\varphi}{ds} = \left( r'(\varphi) \begin{pmatrix} \cos(\varphi) \\ \sin(\varphi) \end{pmatrix} + r(\varphi) \begin{pmatrix} -\sin(\varphi) \\ \cos(\varphi) \end{pmatrix} \right) * \frac{d\varphi}{ds}$$

wobei s die Bogenlänge entlang der Bahn bedeutet und wobei für r(φ) die jeweilige Abhängigkeit einzusetzen ist, also zum Beispiel die Gleichung für eine Ellipse oder für eine sinusüberlagerte Kreisform. Ein zum Krümmungsmittelpunkt weisender Normalenvektor $\vec{n}$ auf der Pintrajektorie ist gegeben durch das Kreuzprodukt:

$$\vec{n} = \begin{pmatrix} 0 \\ 0 \\ 1 \end{pmatrix} \times \frac{d\vec{x}}{ds}$$

Dieser Vektor ist auf den Radius des Pins zu normieren und zu einem Punkt der Pintrajektorie zu addieren, um aus einem Punkt der Pintrajektorie einen Punkt auf der Zahngeometrie bzw. auf der inneren Hüllkurve der Pins zu erhalten. Der auf 1 normierte Vektor $\vec{n}$ wird auch als Hauptnormalenvektor der Trajektorie bezeichnet. Die Zahnform ist durch die Endpunkte der Normalenvektoren bestimmt, die auf den Radius der Pins normiert wurden. Diese Endpunkte beschreiben eine Äquidistante der Pintrajektorie im Abstand des Pinradius. Bei Selbstüberschneidungen der Kurve ist der Kurvenabschnitt zu wählen, der am weitesten von der Pintrajektorie entfernt liegt.

Gemäß einer ersten Methode zur Bestimmung des Zahnprofil, die in Fig. 9 und 10 illustriert ist, werden aus der Pintrajektorie Randbedingungen wie zum Beispiel Stützpunkte abgeleitet, um daraus eine Pintrajektorie zu bestimmen. Aus dieser Pintrajektorie kann dann die Zahnform, zum Beispiel unter Verwendung des Hauptnormalenvektors, bestimmt werden.

Eine Bestimmung des Zahnprofils kann unter Bezug auf die Figuren 9 und 10 wie folgt geschehen. Im Abstand des Teilungswinkels werden halbkreisförmige Zahngründe angeordnet, deren Radius dem Pinradius entspricht. Es werden zwei Stützpunkte durch die Kreismittelpunkte zweier benachbarter Zahngründe bestimmt. Ein weiterer Stützpunkt wird durch den Schnittpunkt der Mittellinie zwischen den benachbarten Zahngründen mit einem Umkreis um die Rotorachse bestimmt, wobei der Umkreis die maximale Auslenkung der Pins markiert.

Durch diese drei Stützpunkte kann zum Beispiel eine Hälfte einer Ellipse, eine Parabel oder ein anderes quadratisches Polynom gelegt werden. Bei Verwendung einer Ellipsenhälfte läuft die Zahnform senkrecht in den Zahngrund, so dass an dieser Stelle kein Knick entsteht. Die lange Achse der Ellipse ist entlang der Symmetrieachse zwischen den benachbarten Zahngründen orientiert, so dass die Stützpunkte den Endpunkten der kleinen Halbachsen und einem Endpunkt einer großen Halbachse entsprechen.

Die in Fig. 9 und 10 gezeigte Zahnform ist insbesondere für Pins geeignet, die so groß sind, dass sich die von den kreisförmigen Querschnitten der Pins überstrichene Spur mit sich selbst überschneidet, wie in Fig. 9 und 10 gezeigt. Dies ist insbesondere der Fall, wenn der Durchmesser der Pins vergleichbar mit dem halben Pinhub ist. Der Pinhub ist in Fig. 9 der Abstand zwischen dem Teilkreis 40 der äußeren Verzahnung und dem Teilkreis 30 der inneren Verzahnung.

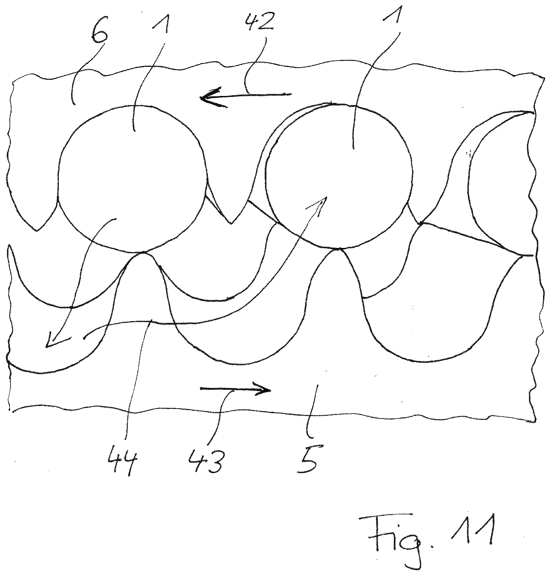

Gemäß einer möglichen Ausführung sind die Zähne des Außenrings 6 so dicht beieinander angeordnet, so dass der Abstand von zwei radial gegenüberliegenden Zahngründen ungefähr dem doppelten Umfang der Pins entspricht. Unter anderem dadurch wird erreicht, dass sich alle Pins ständig im Eingriff befinden. Während einer Bewegung eines Pins 1 wird der Pin 1 in einen gegenüberliegenden Zahngrund gedrückt, wenn er sich über der Spitze eines Zahns befindet. Diese Situation ist in Fig. 11 gezeigt. In Fig. 11 ist eine Bewegungsrichtung des Innenrings 5 ist durch einen Pfeil 43, eine Bewegungsrichtung des Außenrings durch einen Pfeil 42 und eine Bewegung eines Pins 1 von Zahngrund zu Zahngrund durch Pfeile 44 schematisch angedeutet.

Gemäß einer weiteren Methode wird die Zahnform quasi experimentell unter Zuhilfenahme eines geeigneten CAD Simulations-Programms bestimmt. Demgemäß wird für die Zahnform oberhalb eins halbkreisförmigen Zahngrundes eine parameterisierte Kurve vorgegeben. Die Parameter dieser Kurve werden dann solange angepasst, bis in der CAD Simulation der größte Abstand eines Pins von der Oberfläche eines Zahns bei der Bewegung von einem Zahngrund zum nächsten einen vorgegebenen Schwellwert, wie zum Beispiel 10 um, nicht überschreitet. Insbesondere können die Parameter auch so angepasst werden, dass für alle Pins der größte Abstand von einer Oberfläche eines nächstgelegenen Zahns während einer Periode der CAD Simulation einen vorgegebenen Schwellwert, wie zum Beispiel 10 um, nicht überschreitet. Somit ist sichergestellt, dass jeder der Pins zu jedem Zeitpunkt mit einem der Zähne in Berührung steht.

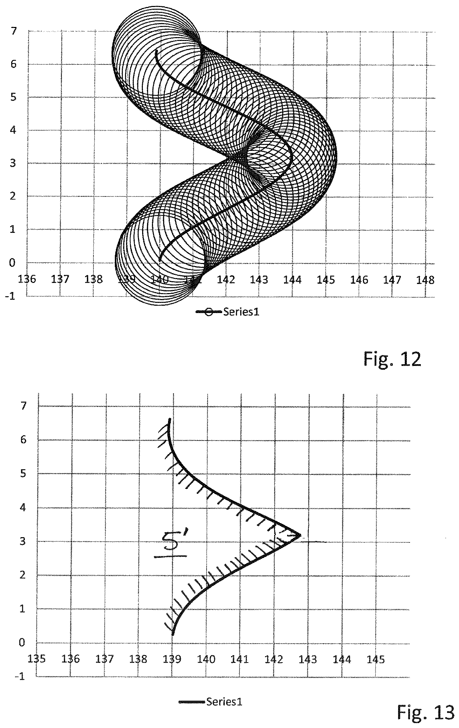

Eine weitere Zahnform erhält man, wenn man eine Randbedingung zu Grunde legt, der zu Folge die Pins sich auf der Pinlaufbahn gleichförmig bewegen, wenn der Antrieb gleichförmig rotiert. Für einen ovalen Transmitter ergibt sich dann eine Pintrajektorie, die in Fig. 12 gezeigt ist und eine Zahnform, die in Fig. 13 gezeigt ist. Ein Bereich eines Innenrings mit dieser Zähnung ist mit 5' bezeichnet. Die Formeln für die ovale und die sinusüberlagerte Pin-Laufbahn sind unten angegeben. Die Radien der Hüllkurven, also die freien Parameter a und b bzw. $r_0 - r_{ep}$ und $r_0 + r_{ep}$ sind gemäß dem Schritt 7) zu bestimmen.

Für die Ellipsenform ergibt sich für den Abstand der Pinlaufbahn vom Mittelpunkt bei einem festen Winkel:

$$r(t) = \frac{b}{\sqrt{1 - \epsilon^2 \sin^2(\omega t - \varphi_0)}}$$

wobei im Argument der Kosinusfunktion der Phasenwinkel steht und $\varepsilon$ die Exzentrizität, also den Quotient b/a bedeutet. Mit $\omega$ ist die Winkelgeschwindigkeit des Rotors 13 bezeichnet. Bei Messung von außen auf den Mittelpunkt zu ist entsprechend r'(t) = $r_0$ - r(t) zu verwenden.

Für die sinusüberlagerte Kreisform ergibt sich:

$$r(t) = r_0 - r_{ep} * \cos(2(\omega t - \varphi_0))$$

Hierbei ist $r_0 - r_{ep}$ der Radius des kleinen Hüllkreises und $r_0 + r_{ep}$ der Radius des großen Hüllkreises. Die sinusüberlagerte Kreisform erhält man auch durch eine Taylorentwicklung der Ellipsengleichung nach dem Quadrat der Exzentrizität bis zur ersten Potenz. Daraus erhält man:

$$r(t) = b * \left(1 + \frac{\epsilon^2}{4} \sin^2(\omega t - \varphi)\right) = b * \left(1 + \frac{\epsilon^2}{8} - \frac{\epsilon^2}{8} \cos(2\omega t - \varphi)\right)$$

Entwicklungen der Ellipsengleichung bis zu höheren Potenzen sind ebenfalls geeignet, eine Transmitterform festzulegen.

Die Trajektorie der Pins in Polarkoordinatendarstellung ergibt sich nun aus folgender Überlegung. Wenn t die Werte 0 bis T durchläuft, wobei T die Umlaufperiode des Rotors 13 ist, ergibt sich aus r(t) die Pinlaufbahn. Ein Pin 1 wandert innerhalb eines halben Umlaufs des Rotors 13 von einem Zahngrund in den nächsten. Also durchläuft t innerhalb des Teilungswinkels die Werte 0 bis T/2.

Die Winkelgeschwindigkeit der Pins ist in guter Näherung konstant. Für eine noch genauere Näherung ist ein sinusförmig oszillierender Korrekturterm in der Winkelgeschwindigkeit zu berücksichtigen, der aber bei den oben betrachteten Zähnezahlverhältnissen nur wenige Prozent ausmacht. Mit dem Teilungswinkel $\varphi_T = 2\pi/Z$, wobei Z die Anzahl der Zähne ist, ergibt sich $\varphi(t) = t/(T/2) * \varphi_T$ und somit $t(\varphi) = \varphi * T/2\varphi_T$.

Wenn r(t) durch eine Funktion f($\omega t - \varphi_0$) bestimmt ist, ergibt sich die Pintrajektorie $r(\varphi)$ eines einzelnen Pins als

$$r(\varphi) = f\left(\omega * \varphi * \frac{T}{2\varphi_T} - \varphi_0\right) = f\left(\varphi * \frac{Z}{2} - \varphi_0\right)$$

bzw. mit $\varphi_0$ = 0 als eine um den Faktor Z/2 gestauchte Pinlaufbahn.

Ein Teil dieser Pintrajektorie sowie die zugehörige Bewegung der Pins ist in Figur 11 für eine elliptische Transmitterform gezeigt. Für Figur 12 wurde die Hüllkurve der Pins mit Hilfe des Hauptnormalenvektors numerisch ausgerechnet. Diese Hüllkurve legt die Zahngeometrie fest. Die Längeneinheiten in Fig. 11 und 12 sind in willkürlichen Einheiten aber für beide Achsen gleich gewählt. In diesen Einheiten ist der Pinradius für Fig. 12 größer als eins und für Fig. 13 gleich eins gewählt.

Wegen der gewählten Größe der Pins ergibt sich auch gemäß dieser Methode eine spitze Zahnform, jedoch haben die Flanken des Zahngrundes eine geringere Steigung als 90 Grad.

Im Folgenden werden unter Bezugnahme auf die Figuren 15 bis 23 weitere Ausführungsformen von Getrieben beschrieben, die insbesondere in Verbindung mit einer der vorgenannten Zahngeometrien eingesetzt werden können, bei denen alle Pins eines Zug- oder Druckmittels in Kontakt mit einem Innen- und einem Außenring stehen.

Im Folgenden beziehen sich die Richtungsangaben "axial", "radial" und "peripher" bzw. "entlang des Umfangs" auf eine zentrale Rotationsachse einer Getriebeeinheit, die auch als Getriebemittelachse bezeichnet wird. Eine Getriebemittelachse ist zum Beispiel durch die Rotationsachse des Rotors einer Motoreinheit vorgegeben.

In Figur 15 ist eine Schnittansicht eines harmonischen Pinring-Getriebes 150, das auch als "Harmonic Pin-Ring-Drive" bezeichnet wird, gemäß einem ersten Ausführungsbeispiel gezeigt. Eine Antriebseinheit 107 und eine Getriebeeinheit 108 sind jeweils über ein Getriebe-Kugellager 109 und über ein Antriebs-Kugellager 110 auf einer Kurbelwelle 111 gelagert, die auch als Tretlagerwelle 111 bezeichnet wird. Die Antriebseinheit 107 weist eine Steuereinheit 112 und eine Motoreinheit 113 auf, wobei in der Steuereinheit 112 ein Batteriekontakt 114 und eine Steuerelektronik 115 vorgesehen sind.

Die Motoreinheit 113 weist einen Innenläufermotor mit einem Stator 116 auf, der an einer Innenseite eines topfförmigen Gehäuseteils 117 angebracht ist. Spulenwindungen einer Statorspule des Stators 116 sind mit Anschlüssen der Steuerelektronik 115 verbunden.

Eine Rotorwelle 118 der Motoreinheit 107 ist über ein Wälzlager 119, das ein erstes Kugellager 120 und ein zweites Kugellager 121 aufweist, innerhalb des Stators 116 gelagert. Auf der Rotorwelle 118 sind zwei Reihen von Permanentmagneten 122 angebracht, die der Statorspule radial gegenüberliegen. Die Rotorwelle 118 ist als eine Hohlwelle geformt die sich zur Getriebeeinheit 108 hin über eine innere Stufe und eine äußere Stufe stufenförmig erweitert. Die äußere Stufe der Rotorwelle 118 umgreift eine ringförmige Stufe an einer Kurvenscheibe 104 der Getriebeeinheit 108, so dass die äußere Stufe der Rotorwelle 118 reibschlüssig mit der ringförmigen Stufe der Kurvenscheibe 104 in Eingriff steht.

Die Kurvenscheibe 104, die auch als Wellgenerator 104 bezeichnet wird, ist in dem gezeigten Ausführungsbeispiel nicht über ein gesondertes Lager nach innen abgestützt, sondern sie ist motorseitig an der Rotorwelle 118 und getriebeseitig an einem Innenrad 105 der Getriebeeinheit 108 abgestützt. Ferner ist die Kurvenscheibe 104 über die äußere Stufe der Rotorwelle 118 relativ zur Kurbelwelle 111 zentriert. Der äußere Umfang der Kurvenscheibe 104 weist eine ovale Form auf, wie zum Beispiel eine Ellipsenform oder eine sinusüberlagerte Kreisform. Auf dem äußeren Umfang der Kurvenscheibe 104 ist ein Dünnring-Kugellager 102 mit einem verformbaren Innenring 123 und einem verformbaren Außenring 124 aufgespannt.

Radial außerhalb des Dünnring-Kugellagers 102 liegt ein motorseitiger Pinring 103' auf dem Dünnring-Kugellager 102 auf, der rillenförmige Vertiefungen in axialer Richtung aufweist, in die Zylinderstifte 101 beziehungsweise Pins 101 eingesetzt sind. Die Zylinderstifte 101 greifen in ein Außenrad 6 mit einer Innenverzahnung 126 ein, das sich radial außerhalb der Zylinderstifte 101 befindet.

Das Außenrad 106 ist mit einem Absatz des topfförmigen Gehäuseteils 117 und mit einer Getriebeabdeckung 127 verschraubt, wobei die Schrauben in axialer Richtung durch die Getriebeabdeckung, das Außenrad 106 und durch eine Stufe des topfförmigen Gehäuseteils 117 verlaufen. Das Außenrad 106 ist in einem ersten Bereich radial außerhalb der Kurvenscheibe 104 und in einem zweiten Bereich Teil radial außerhalb eines Innenrads 105 angeordnet. Das Innenrad 5 ist radial gegenüber dem Außenrad 106 angeordnet, wobei die Pins 101 in eine Außenverzahnung 125 des Innenrads 105 und in eine Innenverzahnung 126 des Außenrads 106 eingreifen.

Ein getriebeseitiger Pinring 103 ist axial gegenüber dem motorseitigen Pinring 103' angeordnet, so dass sich das Außenrad 106 zwischen dem getriebeseitigen Pinring 103 und dem motorseitigen Pinring 103' befindet. Der getriebeseitige Pinring 103 weist ebenso wie der motorseitige Pinring 103' rillenförmige Vertiefungen in axialer Richtung auf, in die die Pins 101 eingreifen. Die Pins 101 sind in axialer Richtung durch eine getriebeseitige Anlaufscheibe 130 und eine motorseitige Anlaufscheibe 131 abgestützt, wobei die getriebeseitige Anlaufscheibe 130 an der Getriebeabdeckung 127 und die motorseitige Anlaufscheibe 131 an dem topfförmigen Gehäuseteil 117 angeordnet ist. Die motorseitige Anlaufscheibe 131 erstreckt sich radial nach innen bis ungefähr auf die Höhe der Mitte des Dünnring-Kugellagers 102.

Das Innenrad 105 ist über ein Wälzlager 132 nach innen auf einem Bereich der Getriebeabdeckung 127 gelagert. An einem äußeren Bereich 134 des Innenrads 105 ist ein Abtriebshalter 133 angeschraubt, wobei ein Bereich des Innenrads 105 und der Abtriebshalter 133 den Außenring des Wälzlagers 132 umgreifen. Ein innerer Bereich 135 des Innenrads 105 ist auf einer äußeren Freilaufkupplung 136 gelagert, deren Innenring auf einer Abtriebs-Hohlwelle 137 ausgeformt ist. Die Abtriebs-Hohlwelle 137 ist über ein zweireihiges Kugellager 138 radial nach außen auf einem Bereich der Getriebeabdeckung 127 gelagert. An der Abtriebs-Hohlwelle 137 ist radial auswärts ein Kettenradadapter 139 befestigt.

Die Abtriebs-Hohlwelle 137 ist über das Kugellager 109 auf einer Hülse 140 gelagert, die auf der Kurbelwelle 111 angeordnet ist. Die Hülse 140 ist mit der Kurbelwelle 111 über eine Keilwellenverzahnung verbunden. Die Kurbelwelle 111 weist ein Keilwellenprofil 169, das in ein Keilwellenprofil 170 der Hülse 140 eingreift. Die Kurbelwelle 111 weist an einem getriebeseitigen Ende einen Befestigungsbereich 171 für eine erste Tretkurbel und an einem motorseitigen Ende einen Befestigungsbereich 172 für eine zweite Tretkurbel auf. Die Tretkurbeln sind der Einfachheit halber in Fig. 15 nicht dargestellt.

Weiterhin ist die Abtriebs-Hohlwelle 137 über eine innere Freilaufkupplung 142 auf einem Antriebs-Ring 144 gelagert, der auf der Hülse 140 angeordnet ist.

Die äußere Freilaufkupplung 136 und die innere Freilaufkupplung 142 sind zueinander so angeordnet oder so geschaltet, dass in einer Antriebsrichtung jeweils das Innenrad 105 oder die Kurbelwelle 111 an den Kettenradadapter 139 gekoppelt ist, je nachdem welches von beiden in der Antriebsrichtung schneller rotiert.

Die Getriebeeinheit 108 des harmonischen Pinring-Getriebes 150 ist über Wellendichtungen 145, 147, 149, 151 abgedichtet. Eine innere getriebeseitige Wellendichtung 145 ist benachbart zu der inneren Freilaufkupplung 142 angeordnet und eine äußere getriebeseitige Wellendichtung 147 ist benachbart zu dem zweireihigen Kugellager 138 angeordnet. Eine innere Wellendichtung 149 ist im Inneren der Getriebeeinheit und benachbart zu der äußeren Freilaufkupplung 136 angeordnet.

Eine motorseitige Wellendichtung 151 ist benachbart zu dem Antriebs-Kugellager 110 angeordnet. Das Antriebs-Kugellager 110 ist auf einem motorseitigen Ende der Kurbelwelle 111 zwischen der Kurbelwelle 111 und einem zylinderförmigen Bereich 152 einem Kühldeckel 154 angeordnet. Durch das Antriebs-Kugellager 110 ist die Kurbelwelle 111 radial nach außen auf dem Kühldeckel 154 abgestützt.

Gemäß der Ausführungsform von Fig. 15 ist die Getriebeeinheit 108 gegenüber der Steuereinheit 112 gekapselt, so dass die Elektronik der Getriebeeinheit 108 vor austretendem Getriebeöl geschützt ist. Ebenso ist die Elektronik der Getriebeeinheit 108 gegenüber dem Außenraum gekapselt. Die Kapselung wird unter anderem durch stationäre Gehäuseteile erreicht, die in axialer Richtung aufeinander aufliegen, wobei an den Übergängen zum Außenraum und zum Getriebeinnenraum O-Ringe als Radial- und als Axialdichtungen vorgesehen sind.

Die Steuereinheit 112 weist eine ringförmige Leiterplatte 156 auf, die Komponenten der Steuerelektronik enthält. Die ringförmige Leiterplatte kann über den Batteriekontakt 114 mit einer Batterie verbunden werden, die in Fig. 1 nicht gezeigt ist. Der Batteriekontakt 114 ist über einen Zylinderstift 158 und über eine Schraube 159 mit der Leiterplatte 156 verbunden. Die Leiterplatte 156 liegt über ein Kühlpad 161 auf dem Kühldeckel 154 auf. Der Kühldeckel 154 weist Kühlrippen 162 auf, die sich über eine äußere Oberfläche des Kühldeckels 154 erstrecken.

Fig. 15 zeigt eine Ausschnittvergrößerung von Fig. 15, die in Fig. 15 durch eine ovale Linie markiert ist. Links von dem getriebeseitigen Pinring 103' und rechts von dem motorseitigen Pinring 103 sind die linken und rechten Seiten der Pins 101 in perspektivischer Aufsicht gezeigt. Die horizontalen Begrenzungslinien der Pins 101 entsprechen in etwa den seitlichen Begrenzungen der rillenförmigen Vertiefungen der Pinringe 103, 103', in denen die Pins 101 aufgenommen sind.

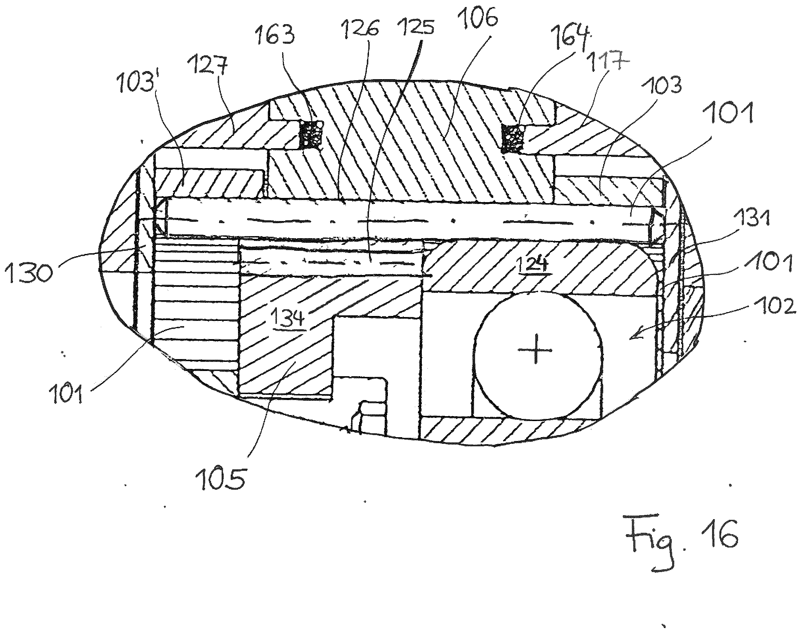

Wie in Fig. 16 besonders gut zu erkennen ist, weist der Außenring 106 getriebeseitig und motorseitig je eine umlaufende Nut auf, wobei in der getriebeseitigen Nut ein O-Ring 163 und in der motorseitigen Nut ein O-Ring 164 eingepasst ist. Die Getriebeabdeckung 127 und die weisen jeweils einen ringförmigen Vorsprung auf, der jeweils in die entsprechende ringförmige Nut eingepasst ist, so dass sich der O-Ring jeweils zwischen dem ringförmigen Vorsprung und der ringförmigen Nut befindet.

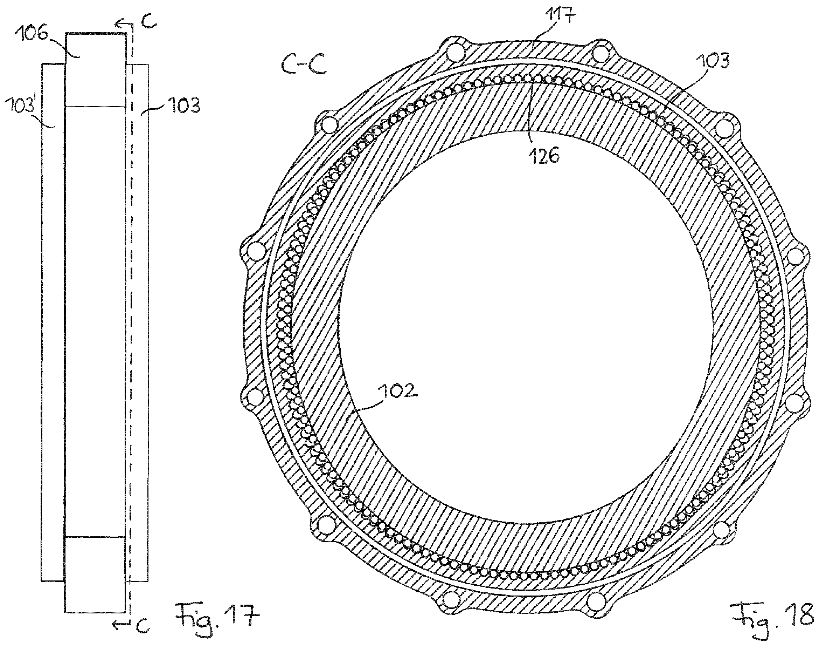

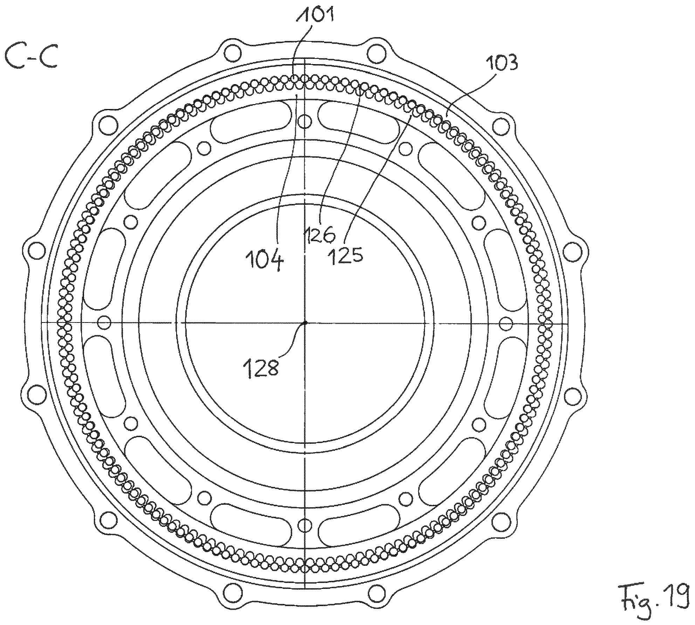

Die Figuren 18 und Fig. 19 zeigen Schnittansichten entlang der Schnittebene C-C. Die Schnittebene C-C, die in Fig. 17 verdeutlicht ist, verläuft senkrecht zu einer zentralen Rotationsachse der Getriebeeinheit 108 durch das Dünnring-Kugellager 102 und durch das toppförmige Gehäuseteil 117, wobei die Blickrichtung zur Getriebeeinheit 108 hin zeigt. Der Übersichtlichkeit halber ist in Fig. 19 das in Fig. 18 gezeigte Dünnring-Kugellager 102 fortgelassen, so dass die Innenverzahnung 125 erkennbar ist.

In Fig. 19 ist durch Hilfslinien verdeutlicht, dass ein Versatz der Pins 101 bei einem 45 Grad Winkel jeweils einen halben Zahnabstand beträgt, so dass sich bei einer vollen Umrundung ein Versatz von 2 Zähnen ergibt. Die Hilfslinien entsprechen jeweils einer großen Halbachse und einer kleinen Halbachse der Kurvenscheibe 104. Der in Fig. 19 gezeigte Versatz ergibt sich, wenn die Innenradverzahnung 125 zwei Zähne weniger als die Außenradverzahnung 126 aufweist. Für eine spiegelsymmetrische Kurvenscheibe 104 sind auch Zähnezahl-Differenzen eines Vielfachen von zwei möglich, wobei jedoch die Untersetzung geringer ist. Die Zahnform und die Dimensionen der Außenverzahnung 125 des Innenrads 105, der Innenverzahnung 26 des Außenrads 106 und der Pins 101 sind so ausgestaltet, dass jeder der Pins 101 sowohl mit der Innenverzahnung 26 als auch mit der Außenverzahnung 125 in Kontakt steht.

Wie in Fig. 18 gezeigt, liegen die Pins 101 radial nach innen auf dem Außenring 124 des Dünnring-Kugellagers 102 auf, das durch die ovale Formgebung der Kurvenscheibe 104 entlang einer großen Halbachse nach außen deformiert ist. Die Pins 101 sind in rillenförmigen Vertiefungen des motorseitigen Pinrings 103 aufgenommen, die in der Ansicht von Fig. 18 geschnitten gezeigt sind. An der oberen und unteren Seite sind die Spitzen der Innenverzahnung 125 gezeigt, die über den motorseitigen Pinring 103 nach innen hinausragen.

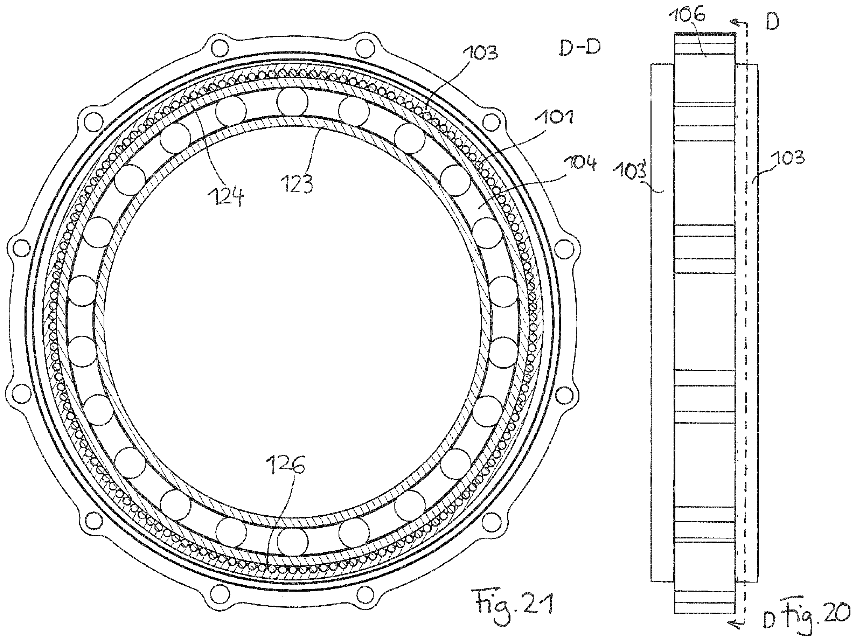

Fig. 21 zeigt eine Schnittansicht entlang der Schnittebene D-D. Die Schnittebene D-D, die in Fig. 20 verdeutlicht ist, verläuft senkrecht zu der zentralen Rotationsachse der Getriebeeinheit motorseitig von dem Innenrad 105 durch die Kurvenscheibe 104, das Dünnring-Kugellager 102 und das Außenrad 106 verläuft, wobei die Blickrichtung zur Getriebeeinheit 108 hin zeigt. Die Schnittebene D-D befindet ist etwas weiter zur Motorseite hin angeordnet als die Schnittebene C-C von Fig. 17 bis 19.

Im Folgenden wird ein Kraftfluss durch das Getriebe unter Bezugnahme auf Fig. 15 und auf Fig. 22 näher erläutert. In Fig. 22 ist ein Kraftfluss von der Rotorwelle 118 zum Kettenradapter 139 sowie ein Kraftfluss von der Hülse 140 zum Kettenradapter 139 durch Pfeile dargestellt. In Fig. 15 ist ein Kraftfluss von der ersten Kurbel zu der Hülse 140 sowie von der zweiten Kurbel zu der Hülse 140 durch Pfeile dargestellt.

Während eines Betriebs der Motoreinheit 113 wird die Leistungselektronik auf der Leiterplatte 156 der Steuereinheit 112 über den Batteriekontakt 114 mit Strom versorgt. Die Elektronik der Steuereinheit 112 erzeugt einen Strom in der Statorspule des Stators 116. Das resultierende Magnetfeld der Statorspule übt eine Kraft auf die Permanentmagneten der Rotorwelle 118 aus, so dass die Rotorwelle 118 angetrieben wird. In einer Ausführungsform erzeugt die Elektronik über eine Pulsweitenmodulation einen Dreiphasenstrom, der durch drei voneinander isolierte Statorspulen des Stators 116 geleitet wird.

Ein Drehmoment der Rotorwelle 118 wird auf die Kurvenscheibe 104 weitergeleitet. Die Kurvenscheibe 104, das darauf angebrachte Dünnring-Kugellager 102, sowie die beiden Pinringe 103, 103' wandeln das Drehmoment in eine Radialkraft um, die auf die Pins 101 übertragen wird. Dabei übt das Dünnring-Kugellager 102 eine Druckkraft auf die Pins 101 aus, die radial nach außen wirkt, und die Pinringe 103, 103' üben eine Zugkraft auf die Pins 101 aus, die radial nach innen wirkt. Die radial nach außen gerichtete Druckkraft der Pins 101 wird an der stationären Innenverzahnung 126 des Außenrads 106 in eine entlang des Umfangs wirkende Kraft auf die stationäre Innenverzahnung 126 sowie in eine entlang des Umfangs wirkenden Gegenkraft auf die Pins 101 umgelenkt.

An der Außenverzahnung 125 des Innenrads 105 wird die radial wirkende Zugkraft auf die Pins 101 in eine entlang des Umfangs wirkende Kraft auf das Innenrad 105 umgelenkt. Des Weiteren wird auch die auf die Pins 101 wirkende Gegenkraft vom Außenrad 106 über die Pins 101 auf das Innenrad 105 übertragen.

Bei einem harmonischen Pinring-Getriebe gemäß der Figuren 15 bis 23 ist ein Transmitter und eine Außenverzahnung 125 eines Innenrads 105 jeweils wenigstens teilweise in axialer Richtung innerhalb des Außenrads 106 angeordnet, so dass ein erster radialer Kraftfluss 167 in gerader Richtung vom Transmitter über die Pins 101 zur Innenverzahnung 126 des Außenrads 106 verläuft und ein zweiter radialer Kraftfluss 168 in gerader Richtung von der Innenverzahnung 126 des Außenrads 106 über die Pins 101 zur Außenverzahnung 125 des Innenrads 105 verläuft. Insbesondere können gemäß der vorliegenden Beschreibung der erste radiale Kraftfluss 167 und der zweite radiale Kraftfluss 168 senkrecht auf der zentralen Getriebeachse 128 stehen.

Dieser Verlauf des radialen Kraftflusses ist günstig, um ein Biegemoment oder auch ein Kippmoment auf die Pins 101 zu vermeiden und zum Erreichen einer gleichmäßige Belastung der Verzahnungen. Dieser Kraftfluss unterscheidet sich von einem Kraftfluss bei einem Getriebe einer Bauart wie sie beispielsweise in der Patentschrift AT 372 767 offenbart ist. Bei einem Getriebe gemäß der AT 372 767 verläuft ein Kraftfluss von einem Exzenter über ein Kugellager und einen Tragring in einen Endbereich einer Rollenkette, der sich nicht axial innerhalb eines Außenrads befindet. Dadurch wirkt bei einem Getriebe gemäß der AT 372 767 auf die Rollen der Rollenkette ein Biegemoment und zwar insbesondere dann, wenn eine Druckkraft auf die Rollen ausgeübt wird.

In Fig. 22 ist ein erster Bereich 165 des Außenrads 106, in dem die Innenverzahnung 126 des Außenrads 106, die Pins 101 und die Außenverzahnung 125 des Innenrads 105 in axialer Richtung überlappen, durch eine erste geschweifte Klammer gekennzeichnet und ein zweiter Bereich 166 des Außenrads 106, in dem die Innenverzahnung des Außenrads 106, die Pins 101 und ein äußerer Umfang eines Transmitters in axialer Richtung überlappen, durch eine zweite geschweifte Klammer gekennzeichnet. Die Kurvenscheibe 104, der Innenring 123 und der Außenring 124 des Dünnring-Kugellagers 102 befinden sich zumindest teilweise in axialer Richtung innerhalb des zweiten Bereichs 166.

Zudem befindet sich ein innerer Auflagebereich, in dem die Kugellagerkugeln des Dünnring-Kugellagers 102 den Innenring 123 des Dünnring-Kugellagers 102 berühren, und ein äußerer Auflagebereich, in dem die Kugellagerkugeln des Dünnring-Kugellagers 102 den Außenring 124 des Dünnring-Kugellagers 102 berühren, innerhalb des zweiten Bereichs 166. Wenn statt Kugellagerkugeln beispielsweise zylindrische Wälzelemente verwendet werden, die einen breiteren Auflagebereich in axialer Richtung aufweisen, kann sich der innere und der äußere Auflagebereich der Wälzelemente auch nur teilweise axial innerhalb des zweiten Bereichs 166 befinden.

Der oben genannte Transmitter kann insbesondere eine oval geformte Kurvenscheibe 104 und ein verformbares Dünnring-Kugellager 102 aufweisen, so wie dies in den Figuren 15 bis 23 gezeigt ist. Der Transmitter kann aber auch ein oder mehrere Exzenterscheiben aufweisen, so wie dies zum Beispiel in den Figuren 7 und 8 gezeigt ist. Diese Exzenterscheiben können zur Vermeidung von Reibung wiederum Kugellager aufweisen, die aber nicht verformbar zu sein brauchen. Bei Verwendung von Exzenterscheiben befinden sich die Exzenterscheiben und gegebenenfalls die Kugellager oder die Wälzlager zumindest teilweise in axialer Richtung innerhalb des Außenrads.

Der erste Bereich 165 und der zweite Bereich 166 können in axialer Richtung im Wesentlich unmittelbar benachbart sein, wie in Fig. 22 gezeigt, oder sie können auch voneinander beabstandet sein. Zwischen dem Innenrad 104 und dem Dünnring-Kugellager kann ein Abstand vorgesehen sein. In dem Beispiel der Fig. 22 ist ein Abstand zwischen der Außenverzahnung 125 des Innenrads 105 und dem Außenring 124 des Dünnring-Kugellagers 102 bereits durch die abgerundete Formgebung des Außenrings 124 gegeben.

Das Drehmoment des Innenrads 105 wird über die äußere Freilaufkupplung 136 und die Abtriebs-Hohlwelle 137 auf den Kettenradadapter 139 übertragen und kann dort über ein Antriebsmittel wie beispielsweise einem Kettenrad und einer Kette auf ein anzutreibendes Element, wie zum Beispiel eine Radnabe weitergeleitet werden.

Dieser Drehmomentverlauf ist ähnlich zu dem Drehmomentverlauf in der WO 2010/1131115, die hiermit per Referenz aufgenommen ist. Hierbei entspricht das dort genannte Innenrad bzw. "inner wheel" dem Innenrad oder den Innenrädern mit Außenverzahnung in der vorliegenden Beschreibung, das dort genannte Außenrad bzw. "outer wheel" entspricht dem Außenrad mit Innenverzanung in der vorliegenden Beschreibung. Das dort genannte Antriebsmittel bzw. "traction means" entspricht den Pins, insbesondere dem Pinring mit den Pins in der vorliegenden Beschreibung, und der dort genannte Transmitter entspricht der ovalen Kurvenscheibe und dem Dünnring-Kugellager oder auch dem Exzenter mit dem darauf aufliegenden Kugellager oder dem Doppelexzenter mit den darauf aufliegenden Kugellagern. Ein Pinring 103, 103' mit Pins 101 entspricht sowohl einem Zugmittel als auch einem Druckmittel, wobei eine Zugkraft im Wesentlichen durch den Pinring 103, 103' und eine Druckkraft im Wesentlichen durch die Pins 101 übertragen wird.

Ähnlich wie in der WO 2010/1131115 in Figur 18 gezeigt kann bei einem Getriebe gemäß der vorliegenden Beschreibung zum Beispiel auch das Innenrad stationär an einem Gehäuse befestigt sein und das Außenrad mit einer Abtriebswelle verbunden sein oder ein Teil der Abtriebswelle bilden.

Gemäß der WO 2010/1131115 wird eine Kette durch einen Transmitter in einen Außenring gedrückt und in einen Innenring gezogen.

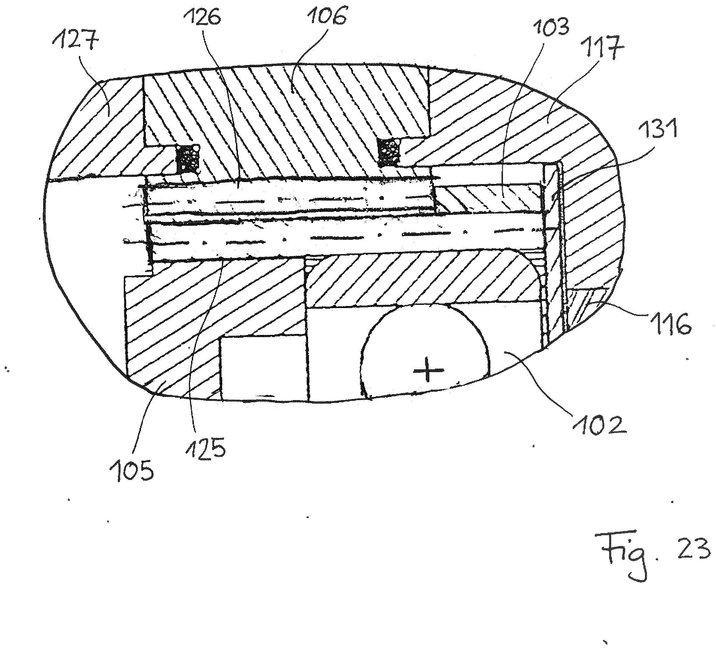

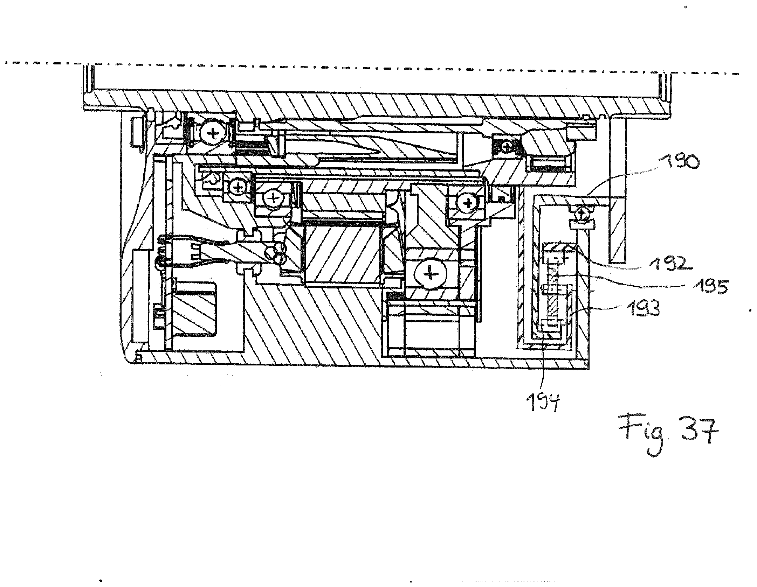

Weitere Ausführungsbeispiele mit einem ähnlichen Drehmomentverlauf sind in der WO 2012/046216 offenbart, die hier ebenfalls per Referenz aufgenommen ist. In der WO 2012/046216 sind sowohl Anordnungen gezeigt, in denen sich Innenring, Außenring, Antriebsmittel und Transmitter in einer Ebene befinden als auch Anordnungen, bei denen der Transmitter in einer anderen Ebene angeordnet ist, als Innen- und Außenring, wie zum Beispiel in Fig. 23, 25, 41, 42, 43 der WO 2012/046216. Insbesondere bei einer Ausführungsform bei der der Transmitter nicht verformt wird, wie bei einem Exzenter, kann ein Kugellager oder Wälzlager sowohl radial gesehen an einer Innenseite angeordnet sein, wie in Fig. 37 der WO 2012/046216 gezeigt, als auch an einer Außenseite, wie in Fig. 41 der WO 2012/046216 gezeigt.

Die Figuren 23 bis 25 zeigen Ausschnittvergrößerungen aus Getrieben, die ähnlich zu dem in Fig. 15 gezeigten Getriebe aufgebaut sind. Der Einfachheit halber sind dabei Getriebeteile, die den Getriebeteilen des Getriebes auf Fig. 15 entsprechen, fortgelassen. In Fig. 23 ist eine Winkelposition gezeigt, in der sich ein Pin 101 im Zahngrund der Außenverzahnung 125 des Innenrads befindet.

Das Getriebe von Fig. 23 weist im Gegensatz zu dem in Fig. 15 gezeigten Getriebe nur einen motorseitigen Pinring 103 auf. Gemäß dem Ausführungsbeispiel von Fig. 22 wird eine Zugkraft von dem Pinring 103 über die Pins 101 auf die axial gegenüberliegende Seite der Pins übertragen, so dass die Pins 101 in die Außenverzahnung 125 des Innenrads 105 gedrückt werden.

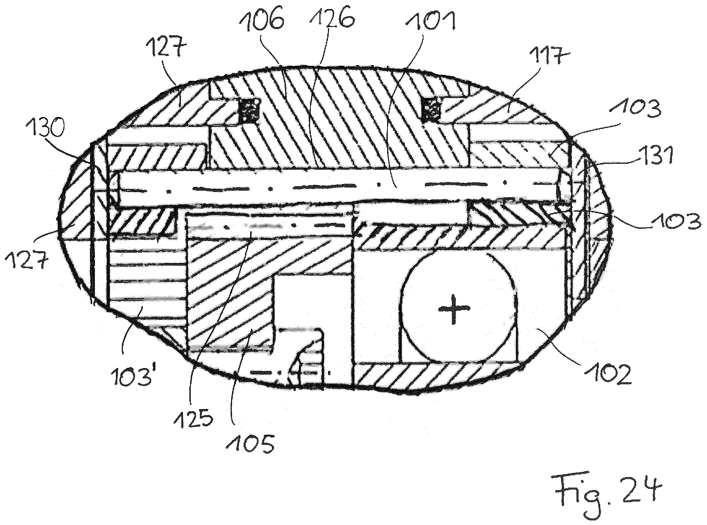

Fig. 24 zeigt eine Ausschnittvergrößerung aus einem Getriebe, bei dem die Pins in einen motorseitigen Pinring 103 und in einen getriebeseitigen Pinring 103' eingesetzt sind. Somit befinden sich in der Schnittansicht von Fig. 23 der motorseitige Pinring 103 und der getriebeseitige Pinring 103' radial innerhalb und außerhalb der Pins 101.

Fig. 24 zeigt eine Ausschnittvergrößerung aus einem Getriebe, bei dem ein dritter Pinring 103'' in einer Nut 173 des Außenrads 106 angeordnet ist. In dieser Ausgestaltung weist das Außenrad 106 ein motorseitiges Teil 106' und ein getriebeseitiges Teil 106'' auf, die miteinander verbunden sind. Bei eine Getriebemontage kann der dritte Pinring in die Nut 173 eingefügt werden bevor die Teile 106' und 106'' des Außenrads 106 beispielsweise durch Verschrauben miteinander verbunden werden.

Die Ausführungsbeispiele der Figuren 22 bis 24 können auch kombiniert werden, in dem zum Beispiel nur ein motorseitiger Pinring 103 vorgesehen ist, in den die Pins 101 eingesetzt sind.

Des Weiteren kann auch eine Ausgestaltung vorgesehen werden, bei der in dem Außenring 106 an axial gegenüberliegenden Bereichen jeweils Auflagebereiche für die Pinringe 103 und 103' vorhanden sind, und bei der die Pinringe 103, 103' in axialer Richtung ganz oder teilweise im Innern des Außenrads 106 angeordnet sind. Das Außenrad 106 kann auch zum Beispiel zweiteilig anstatt einstückig ausgeführt sein, wobei eine Teilungsebene senkrecht zur Getriebemittelachse verläuft.

Weiterhin kann das Außenrad 106 oder auch das Innenrad 105 auch aus einzelnen Segmenten aufgebaut sein, die als Kreissegmente ausgebildet sind. Die in Fig. 15 bis 23 gezeigte Ausführung des Innen- oder Außenrads 105, 106 als ein Ring, der in Umfangsrichtung einstückig ist, bietet eine größere Stabilität und Formbeständigkeit während eine Ausführung aus Kreissegmenten eine leichtere Montage ermöglicht.

Die Getriebe der Figuren 15 bis 24 können statt der ovalen Kurvenscheibe 104 auch einen Einfach- oder einen Doppelexzenter aufweisen, ähnlich wie es in den Figuren 7 und 8 gezeigt ist.

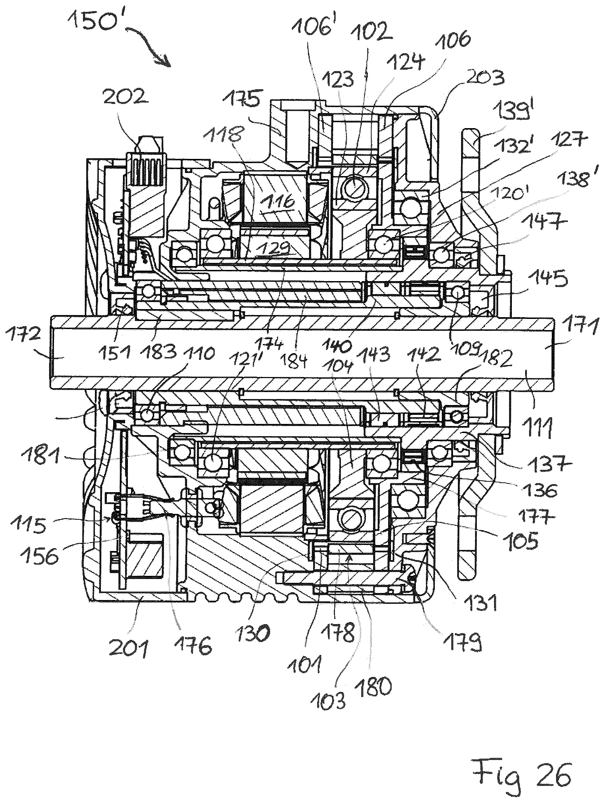

Die Figuren 26 bis 30 zeigen ein weiteres Ausführungsbeispiel eines harmonischen Pinring-Getriebes 150'. Ähnliche Bauteile haben die gleichen Bezugsziffern wie in dem Ausführungsbeispiel der Figuren 15 und 22 oder mit Apostroph bezeichnete Bezugsziffern.

Fig. 26 zeigt eine Querschnittsansicht des harmonischen Pinring-Getriebes 150'. In Fig. 26 entspricht die linke Seite einer Antriebsseite und die rechte Seite einer Abtriebsseite des harmonischen Pinring-Getriebes.

Ein Stator 116 einer Stator-Baugruppe des harmonischen Pinring-Getriebes 150' ist in einem Motorgehäuse 175 angeordnet. Der Stator 116 weist drei separate Spulen zum Anschluss an drei Phasen eines Dreiphasen-Wechselspannungsgenerators auf. Der Dreiphasen-Wechselspannungsgenerator ist als eine Leistungselektronik ausgebildet, die auf einer Leiterplatte 156 angeordnet ist, wobei die Leiterplatte 156 in einem Motorgehäuse 175 auf der Antriebsseite angebracht ist. Die drei Spulen des Stators 116 sind mit dem Dreiphasen-Wechselstromgenerator durch drei Steckverbinder 176 verbunden, von denen einer in Fig. 1 gezeigt ist.

Ein Rotor 129, der mit Permanentmagneten bestückt ist, ist radial innerhalb des Stators 116 angeordnet. Der Rotor 129 ist auf einer Rotorwelle 118 angeordnet, die als eine langgestreckte Büchse ausgebildet ist. Die Rotorwelle 118 ist an der Antriebsseite nach außen in einem antriebsseitigen Rotor-Kugellager 121' gelagert, wobei ein Außenring des antriebsseitigen Rotor-Kugellagers 121' in einer zylindrischen Aussparung des Motorgehäuses 175 angeordnet ist.

Die Rotorwelle 118 ist an der Abtriebsseite in einem abtriebseitigen Rotor-Kugellager 120' radial nach außen in einem Innenrad 105 gelagert. Eine Hohlwelle 177 des Innenrads 105 ist radial nach außen über ein Innenrad-Kugellager 132' auf einem Gehäusedeckel 127 gelagert, wobei das Innenrad-Kugellager 132' gegenüber dem abtriebseitigen Rotor-Kugellager 120' in axialer Richtung zur Abtriebsseite hin versetzt ist.

Auf dem Rotor 129 ist eine Kurvenscheibe 104 angeordnet. Die Kurvenscheibe 104 hat die Form einer Ellipse oder eine ellipsenähnliche Form. Auf der Kurvenscheibe 104 ist ein Flex-Kugellager 102 oder Dünnringkuggellager aufgeschrumpft, bei dem ein Innenring 123 und ein Außenring 124 verformbar sind.

Anstatt der ellipsenförmigen Kurvenscheibe 104 können auch zwei Kreisscheiben eingebaut werden, deren Mittelpunkte gegeneinander versetzt sind, ähnlich wie es in Fig. 8 gezeigt ist. In diesem Fall können die Kreisscheiben innen durch Kugellager drehbar gelagert sein, so dass das Flex-Kugellager 102 entfallen kann.

Zur besseren Unterscheidung wird im Folgenden der Ring, der die Pins aufnimmt, als Pinring bezeichnet und die Gesamtheit aus den Pins und dem Pin-Haltering als Pinring.

Auf dem Flex-Kugellager 102 liegt ein Pinring 103 mit Pins 101 auf, wobei die Pins 101 in zylindrischen Aussparungen an der Innenseite eines Pin-Halterings 178 gehalten sind. Die zylindrischen Aussparungen verlaufen in axialer Richtung und sind in radialer Richtung zur Innenseite hin offen. Die Pins 101 des Pinrings 103 stehen in axialer Richtung zu beiden Seiten über das Flex-Kugellager 102 und über den Pin-Haltering 178 hervor.

Die Kurvenscheibe 104 und das Flex-Kugellager 102 bilden zusammen einen Transmitter, der ein Drehmoment in eine radiale Kraft umwandelt. Statt eines Flex-Kugellagers mit flexiblem Innen- und Außenring kann auch Drahtwälzlager verwendet werden, oder ein Flex-Kugellager ohne Außenring, wobei die Funktion des Außenrings durch einen dafür ausgebildeten Pin-Haltering übernommen wird.

Der Gehäusedeckel 127 ist auf der Abtriebsseite des Motorgehäuses 175 an dem Motorgehäuse 175 mit Befestigungsschrauben 179 aufgeschraubt. Weiterhin sind ein antriebsseitiges Außenrad 106' und ein abtriebsseitiges Außenrad 106 über die Befestigungsschrauben 179 zwischen dem Gehäusedeckel und dem Motorgehäuse befestigt, wobei zwischen dem antriebseeitigen Außenrad 106' und dem abtriebsseitigen Außenrad 106 Abstandshülsen 180 vorgesehen sind, durch die die Befestigungsschrauben 179 hindurchgeführt sind. Zwischen dem abtriebsseitigen Außenrad 106 und dem Gehäusedeckel 127 ist radial außen ein O-Ring 185 eingefügt.

Auf dem Gehäusedeckel ist ein Abdeckring 203 aufgeschraubt. Durch den Abdeckring 203 werden Stützstreben des Gehäusedeckels 127 abgedeckt und eine glatte Oberfläche bereitgestellt. Dies kann beispielsweise vorteilhaft sein, wenn ein abgerutschtes Antriebsmittel zwischen den Kettenradadapter 139 und das Motorgehäuse 175 gerät.

Das antriebsseitige Außenrad 106' und das abtriebsseitige Außenrad 106 sind in axialer Richtung außerhalb der Kurvenscheibe 104 und des Flex-Kugellagers 102 angeordnet.

Das antriebseitige Außenrad 106' steht in radialer Richtung den Bereichen der Pins 101 gegenüber, die auf der Antriebseite in axialer Richtung über den Pin-Haltering 178 überstehen. Das abtriebsseitige Außenrad 106 steht in radialer Richtung den Bereichen der Pins 101 gegenüber, die auf der Abtriebsseite in axialer Richtung über den Pin-Haltering 178 überstehen.

Auf der Antriebsseite ist ein antriebsseitiger Anlaufring 130 so in dem Motorgehäuse 175 angeordnet, dass er den antriebseitigen Stirnflächen der Pins 101 in axialer Richtung gegenübersteht. In ähnlicher Weise ist auf der Abtriebsseite ein abtriebsseitiger Anlaufring 131 so in dem Motorgehäuse 175 angeordnet, dass er den abtriebsseitigen Stirnflächen der Pins 101 in axialer Richtung gegenübersteht.

Eine Abtriebswelle 137 ist radial innerhalb der Hohlwelle 177 des Innenrads 105 angeordnet, wobei ein Motor-Freilauf 136 zwischen der Hohlwelle 177 des Innenrads 105 und der Abtriebswelle 137 angeordnet ist. Eine Stützwelle 174 ist antriebsseitig in radialer Richtung außen auf die Abtriebswelle 137 aufgesetzt. Die Stützwelle 174 ist radial nach außen in einem antriebsseitigen Abtriebs-Kugellager 181 gelagert, das in eine zylinderförmige Vertiefung oder Schulter des Motorgehäuses 175 eingesetzt ist.

Die Abtriebswelle 137 ist radial nach außen in ein einem abtriebsseitigen Abtriebs-Kugellager gelagert 138', das in eine zylinderförmige Aussparung oder Schulter des Motordeckels 127 eingesetzt ist. Der abtriebsseitige Bereich der Abtriebswelle 137 steht in axialer Richtung über den Gehäusedeckel 127 über. Eine Kettenblattadpater 139' ist auf die Abtriebswelle 137 eingesetzt.

Im Inneren der Abtriebswelle 137, die als eine Hohlwelle ausgeführt ist, ist eine Tretwelle 111 angeordnet. Auf der Tretwelle 11 ist abtriebsseitig eine Gleitbuchse 182 angeordnet. Eine Messwelle 140 ist so auf der Tretwelle 111 angeordnet, dass sie auf der Antriebsseite über Passfedern 183 drehfest mit der Tretwelle 111 verbunden ist und an der Abtriebsseite auf einer Schulter der Gleitbuchse 182 aufliegt. Die Gleitbuchse 182 ist über ein abtriebsseitiges Tretwellen-Kugellager 109 radial nach außen in der Abtriebswelle 137 gelagert. Die Messwelle 140 ist über ein antriebsseitiges Tretwellen-Kugellager 110 radial nach außen an dem Motorgehäuse 175 gelagert.

In antriebsseitiger Richtung von dem abtriebsseitigen Tretwellen-Kugellager 109 sind zwei benachbarte TretwellenFreiläufe 142, 143 zwischen der Messwelle 140 und der Abtriebswelle 137 angeordnet. Durch die Verwendung zweier nebeneinander angeordneter Freiläufe 142, 143 wird die Messwelle 140 über einen breiteren Bereich gegenüber der Abtriebswelle 137 abgestützt als bei Verwendung nur eines einzigen Freilaufs. Anstatt zweier Freiläufe kann auch ein einzelner Freilauf und ein dazu benachbartes Wälzlager, wie zum Beispiel ein Nadellager, eingebaut werden.

Ein Spulenkörper 184 ist im Bereich zwischen der Rotorwelle und der Messwelle 140 angeordnet. Der Spulenkörper 174 ist antriebsseitig an dem Motorgehäuse 175 befestigt und von der Rotorwelle 118 und von der Stützwelle 174 in radialer Richtung beabstandet. Ein Messanschluss des Spulenkörpers 184 ist auf der Antriebsseite aus dem Spulenkörper 184 herausgeführt und mit der Motorelektronik verbunden. Die Stützwelle 174 umschließt den Spulenkörper 184 entlang eines größeren Teils der axialen Ausdehnung des Spulenkörpers 184 und schirmt somit den Drehmomentsensor mit dem Spulenkörper 184 und der Messwelle 140 gegen elektromagnetische Einstrahlung des Stators 116 ab, so dass eine verbesserte Messung des Drehmoments ermöglicht wird.

Die Messwelle 140 und der Spulenkörper 184 sind Bestandteile eines magnetostriktiven Drehmomentensors. Der magnetostriktive Drehmomentsensor ist ein berührungsloser Drehmomentsensor, bei dem im Gegensatz zu einem Drehmomentsensor mit Dehnungsmessstreifen auf der Messwelle keine Schleifringe erforderlich sind, und bei dem der stromdurchflossene Bereich am Gehäuse befestigt sein kann.

Abtriebsseitig von dem abtriebsseitigen Tretwellen-Kugellager 109 ist gegenüber dem abtriebsseitigen Tretwellen-Kugellager 109 ein innerer Wellendichtring 145 zwischen der Tretwelle 111 und der Abtriebswelle 137 eingefügt. Weiterhin ist ein äußerer Wellendichtring 147 gegenüber dem abtriebsseitigen Abtriebs-Kugellager 138' zwischen der Abtriebswelle 137 und dem Gehäusedeckel 127 angeordnet.

Im Betrieb wird vom Stator 116 durch elektromagnetische Kraftwirkung ein Eingangs-Drehmoment auf den Rotor 129 und die Rotorwelle 174 übertragen, das durch die Kurvenscheibe 104 und das Flex-Kugellager 102 in eine Radialkraft umgewandelt wird. Diese Radialkraft wird an den Zahnflanken der Außenräder 106, 106' und des Innenrads 105 in ein Ausgangs-Drehmoment umgewandelt, wobei das Innenrad 105 angetrieben wird. Das Ausgangs-Drehmoment ist um das Untersetzungsverhältnis größer als das Eingangsdrehmoment.

Anders als bei dem Ausführungsbeispiel der Figuren 15 und 22 ist bei dem Ausführungsbeispiel der Figuren 26 - 30 ein antriebsseitiges Außenrad 106' sowie ein abtriebsseitiges Außenrad 106 vorgesehen, und die Kurvenscheibe 104 ist in axialer Richtung mittig zwischen dem antriebsseitigen Außenrad 106' und dem abtriebsseitigen Außenrad 106 angeordnet. Hierdurch ergibt sich eine verbesserte Abstützung der auf die Pins 101 des Pinrings 103 einwirkenden Kippmomente aufgrund radial wirkender Kräfte des Transmitters 102, 104.

Des Weiteren ist eine Stützwelle 174, die mit der Abtriebswelle 137 verbunden ist, als langgestreckte Buchse ausgebildet, und die Rotorwelle 118 ist ebenfalls als eine langgestreckte Buchse ausbildet. Durch die größere axiale Ausdehnung der Wellen 118, 137, die an ihren Enden jeweils in Kugellagern 120', 121' bzw. 138', 110 nach außen abgestützte sind, ergibt sich eine verbesserte Abstützung eines Kippmoments verglichen mit den Anordnungen in den Figuren 15 und 22, siehe dort die Kugellager 120, 121 bzw. 138, 110.

Bei dem Ausführungsbeispiel der Figuren 26 bis 30 stützen sich die beiden abstehenden Enden der Pins 101 stabil und bezüglich der Mitte des Pinrings 103 symmetrisch an den äußeren Verzahnungen ab, die durch die Innenverzahnungen der Außenräder 106, 106' gebildet werden, welche im Motorgehäuse 175 starr gelagert sind. Dadurch ergibt sich eine gute Abstützung gegen Verlagerung der Pins 101 aufgrund einer Einleitung der Kräfte über den Pin-Haltering 178.

Die innere Verzahnung, die durch die Außenverzahnung des Innenrads 104 gebildet wird, liegt gegenüber einer der äußeren Verzahnungen, insbesondere gegenüber der abtriebsseitigen äußeren Verzahnung im Außenrad 106, und stellt dadurch das Abtriebsmoment insbesondere durch diejenigen Pins 101 bereit, die sowohl an der inneren Verzahnung als auch an den äußeren Verzahnungen anliegen.

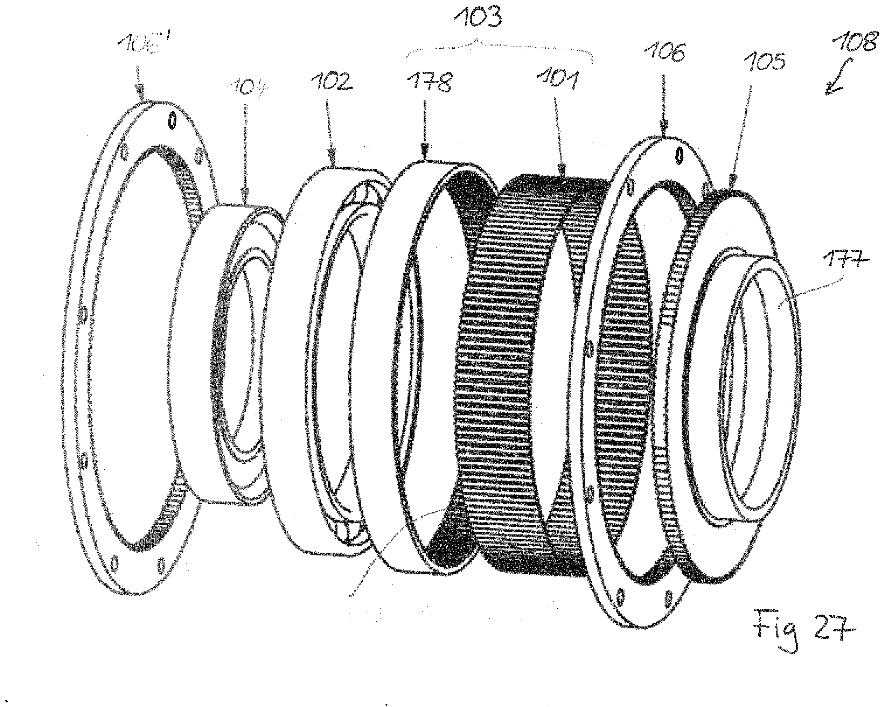

Fig. 27 zeigt eine Explosionsansicht einer Getriebeeinheit 108 des harmonischen Pinring-Getriebes 150' von Fig. 26.

Wie man in dieser Ansicht besonders gut sieht, liegen die Pins 101 in als im Querschnitt im wesentlichen halbkreisförmigen Vertiefungen ausgebildeten Querrillen 99 im Pin-Haltering 178. Somit liegen die Pins 101 auf einer Seite ihres Umfangs in den Querrillen im Pin-Haltering 178 und auf der anderen Seite ihres Umfangs am Außenring des Dünnring-Kugellagers 102 an.

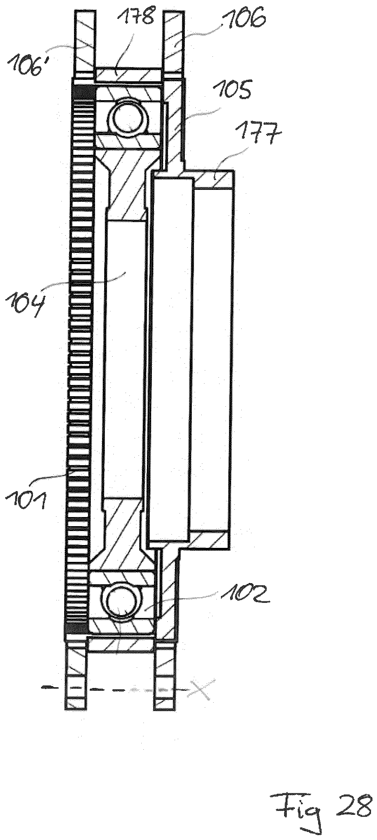

Fig. 28 zeigt eine Schnittansicht der Getriebeeinheit 108 von Fig. 27 im zusammengebauten Zustand. Dabei ist der Übersichtlichkeit halber nur der Bereich der Pins 101 gezeigt, der auf der Antriebsseite über den Pin-Haltering 178 übersteht.

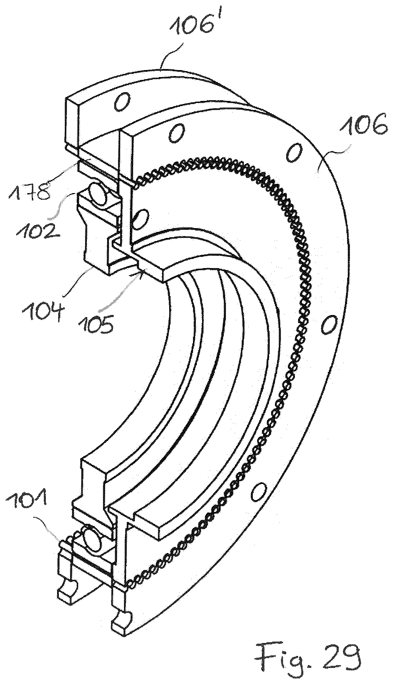

Fig. 29 eine aufgeschnittene dreidimensionale Ansicht der Getriebeeinheit 108 von Fig. 27. Hierbei zeigt die kleine Halbachse der elliptischen Kurvenscheibe 104 nach oben. Im Bereich der kleinen Halbachse liegen die Pins 101 an der Außenverzahnung des Innenrad 105 an, während sie im Bereich der im rechten Winkel dazu versetzten großen Halbachse an den Innverzahnungen der Außenräder 106, 106' anliegen. Die Dimensionierung der Verzahnungen, der Pins 101 und der Kurvenscheibe 104 ist so gewählt, dass die Pins 101 stets an mindestens einem Zahn abgestützt sind.

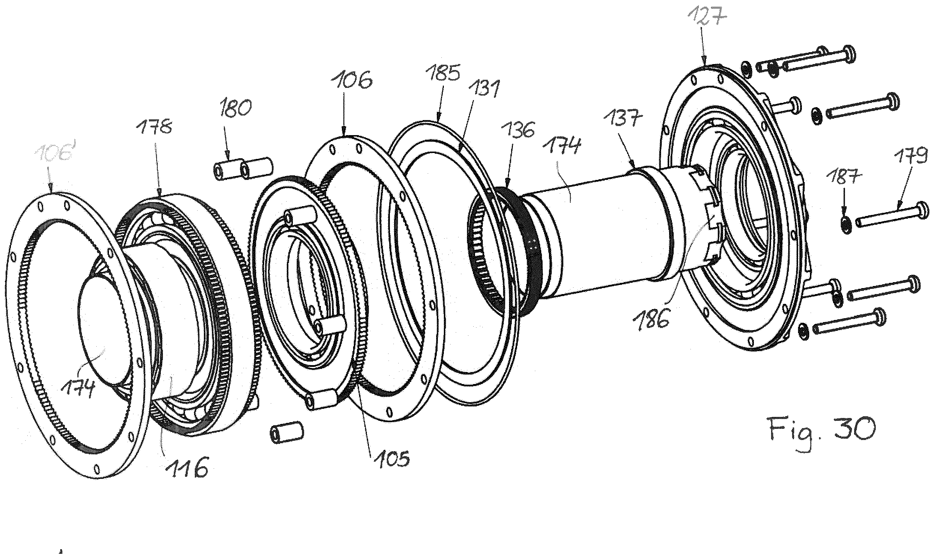

Fig. 30 zeigt eine Explosionsansicht des harmonischen Pinring-Getriebes 150' von Fig. 25.

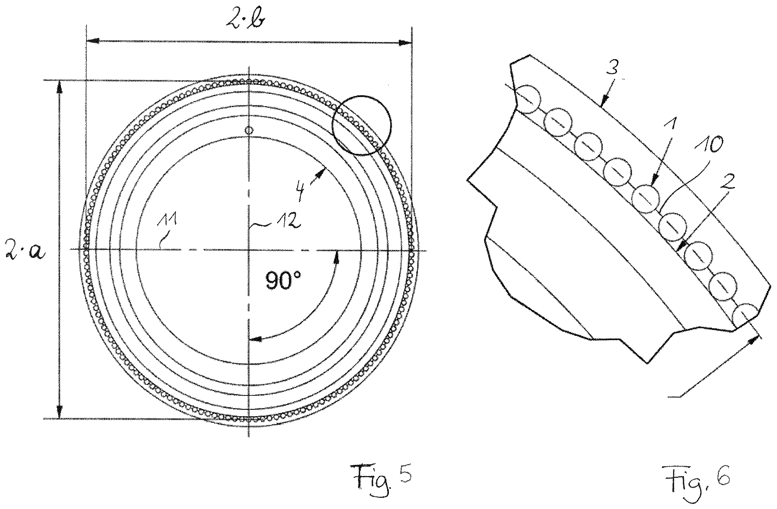

Die Abtriebswelle 137 weist an einem abtriebsseitigen Bereich runde Vertiefungen 186 auf, die auf dem Umfang der Abtriebswelle 137 in gleichmäßigen Abständen angeordnet sind. Der abtriebsseitige Bereich der Abtriebswelle 137 steht in axialer Richtung über den Gehäusedeckel über. Die in Fig. 5 nicht gezeigte Kettenblattadapter 139' ist so auf die Abtriebswelle 137 eingesetzt, dass runde Vorsprünge beziehungsweise Nuten der Kettenblattadapter 139' in die runden Vertiefungen 186 der Abtriebswelle 137 radial von außen eingreifen.

Die neun Schrauben 179 der Fig. 30 sind durch jeweils neun Schraublöcher des Gehäusedeckels 127, des abtriebsseitigen Außenrads 106 und des antriebsseitigen Außenrads 106' hindurchgeführt und durch Unterlegscheiben 187 an dem Gehäusedeckel 127 abgestützt. Sie werden in einem ersten Montageschritt zunächst nur leicht angezogen. Die Außenräder 106, 106' sowie der Gehäusedeckel 127 sind dadurch in ihrer Lage bezüglich der Mittelachse des Getriebes nur durch Reibschluss festgehalten.

Insbesondere die Außenräder 106, 106' weisen bezüglich dieser Lage ein deutliches und gewolltes radiales Spiel auf. In einem weiteren Montageschritt wird die Position im Motorgehäuse 175 dadurch eingestellt, dass das Getriebe angefahren wird, so dass sich diese in eine Ausgleichsposition bewegen, wenn sich die Innenverzahnungen der Außenräder 106, 106', die Außenverzahnung des Innenrads 105 und die Pins 101 zueinander einstellen. Erst danach werden die Schrauben 179 fest angezogen und dadurch die Position der Außenräder 106, 106' dauerhaft festgelegt.

Gemäß einem speziellen Ausführungsbeispiel sind die Innenverzahnungen der Außenräder 106, 106' und die Außenverzahnung des Innenrads 105 aus kostengünstigem nichtgehärtetem und nicht-vergütetem Getriebestahl hergestellt. Hierdurch läuft sich das Getriebe nach der Herstellung leichter ein. Da die weit überwiegende Zahl der Pins sowohl an der Außen- als auch an der Innenverzahnung anliegt und somit an der Übertragung des Drehmoments beteiligt sind, kann gemäß diesem Ausführungsbeispiel ein Werkstoff mit geringerer Festigkeit verwendet werden. Gemäß einem weiteren Ausführungsbeispiel sind die Verzahnungen aus Kunststoff hergestellt.

Eine besonders gute Drehmomentübertragung ergibt sich wenn höchstens vier Pins 101 nicht an der Übertragung des Drehmoments beteiligt sind, nämlich diejenigen Pins 101, die sich genau in Verlängerung der kleinen oder der großen Halbachse der Kurvenscheibe befinden und sich im Zahngrund der inneren Verzahnung oder der äußeren Verzahnungen befinden.

Nachfolgend ist eine Montage des harmonischen Pinring-Getriebes 150' beschrieben. In einem ersten Montageschritt werden die Pins 101 um das Flex-Kugellager 102 herum angeordnet und der Pin-Haltering 178 wird so auf das Flex-Kugellager 102 aufgespannt, dass die Pins in den rillenförmigen Vertiefungen des Pin-Halterings 178 zu liegen kommen.

In einem weiteren Montageschritt wird der Rotor 129 auf die Rotorwelle 118 aufgepresst und die Kurvenscheibe 104 wird ebenfalls auf einer dazu gegenüberliegenden Seite auf die Rotorwelle 118 aufgepresst. Eine axiale Position des Rotors 129 wird mit zwei Distanzscheiben eingestellt, die antriebsseitig von dem Rotor 129 angeordnet sind.

Der Motor-Freilauf 136 und das abtriebseitige Rotor-Kugellager 120' werden in das Innenrad 105 eingefügt. Die Stützwelle 174 wird auf die Abtriebswelle 137 aufgesetzt und der Wellendichtring 145 wird in die Abtriebswelle 137 eingesetzt. Ferner werden das abtriebsseitige Abtriebs-Kugellager 138' und das Innenrad-Kugellager 132' in den Gehäusedeckel 127 eingesetzt.

Weiterhin wird das Innenrad 105 mit dem abtriebsseitigen Rotor-Kugellager 120' und dem Motorfreilauf 136 von der Antriebsseite her auf die Stützwelle 174 aufgesetzt. Der Gehäusedeckel 127 mit den Kugellagern 132', 138' wird von der Abtriebsseite her auf das Innenrad 105 aufgesetzt. Das abtriebsseitige Außenrad 106, sowie der Anlaufring 131 und ein O-Ring werden von der Antriebsseite her auf den Gehäusedeckel 127 aufgesetzt.

Die Rotorwelle 118 mit den darauf angeordneten Bauteilen wird von der Antriebsseite her in das abtriebseitige Rotor-Kugellager 120' eingesetzt, und die Abtriebswelle 137 wird von der Antriebsseite her in die Rotorwelle 118 eingesetzt.

Der Stator 116, das antriebsseitige Abtriebs-Kugellager 181 und das antriebsseitige Rotor-Kugellager 121' werden von der Abtriebsseite her in das Motorgehäuse 175 eingesetzt.

Die Distanzhülsen 180 und das antriebsseitige Außenrad 106' werden von der Antriebsseite her auf das abtriebsseitige Außenrad 106 aufgesetzt. Unterlegscheiben 187 werden auf die Schrauben 179 aufgesetzt und die Schrauben 179 werden von der Abtriebsseite her durch den Gehäusedeckel 127, das abtriebsseitige Außenrad 106, die Distanzhülsen 180 und das Antriebsseitige Außenrad 106' hindurch in Schraublöcher des Motorgehäuses 175 geführt und lose angezogen.

Die Montage der Motorelektronik und einem antriebsseitigen Wellendichtring 151 in einem antriebsseitig angeordneten Kühldeckel 201 erfolgt anschließend.

Ein antriebseitiger Wellendichtring 151 wird in einen Kühldeckel 201 eingesetzt. Die Leiterplatte 156, an der ein Stromversorgungsstecker 202 angebracht ist, wird an den Kühldeckel angeschraubt 201, wobei der Stromversorgungsstecker 202 durch eine obere Öffnung des Kühldeckels 201 hindurchgesteckt wird.

Eine Montage einer Tretwellen-Baugruppe weist die folgenden Montageschritte auf. Die Messwelle 140 und Gleitbuchse 182 werden auf die Tretwelle 111 aufgesetzt und die TretwellenFreiläufe 142, 143 werden auf die Messwelle 140 aufgesetzt. Das abtriebsseitige Tretwellen-Kugellager 109 wird auf die Gleitbuchse 182 aufgesetzt. Die Messwelle 140 mit den Tretwellen-Freiläufen 142, 143 wird von der Antriebsseite her in die Abtriebswelle 137 eingesetzt. Der Spulenkörper 184 wird zwischen der Messwelle 140 und der Stützwelle 174 von der Antriebsseite her eingeführt. Die Tretwellen-Baugruppe wird in das Motorgehäuse 175 eingesetzt.

Dann wird der Kühldeckel 202 auf das Motorgehäuse 175 aufgeschraubt, wobei zwischen dem Kühldeckel 202 und dem Motorgehäuse 175 ein O-Ring vorgesehen ist. Ein Abstands-Ring wird auf den Gehäusedeckel 127 aufgeschraubt, der Kettenblattadapter 139' wird in die runden Einbuchtungen 186 der Abtriebswelle 137 eingesetzt und ein Sicherungsring wird aufgebogen und in eine Rille eingesetzt, die quer zu den runden Einbuchtungen 186 verläuft.

Das Motorgehäuse 175 wird an einen in Fig. 26 - 30 nicht gezeigten Fahrzeugrahmen eines Fahrzeugs angeschraubt und ein nicht gezeigter Batteriestecker des Fahrzeugs wird mit dem Stromversorgungsstecker 202 des harmonischen Pinring-Getriebes 150' verbunden.

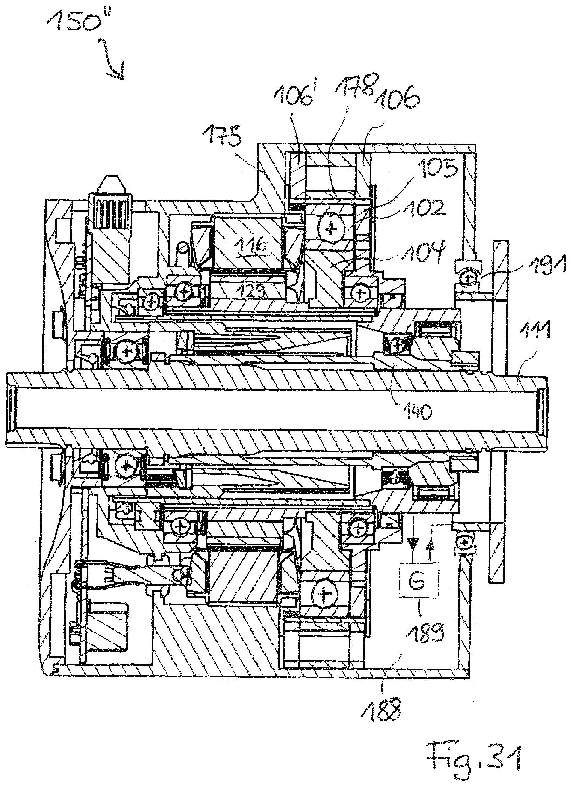

Fig. 31 zeigt ein weiteres harmonisches Pinring-Getriebe 150'', das ähnlich zu dem harmonischen Pinring-Getriebe von Fig. 26 ist, wobei zwischen der Abtriebswelle 137 und dem Kettenblattadapter 139' ein Bauraum 188 für ein Getriebe 189 angeordnet ist. Ein harmonisches Pinring-Getriebe gemäß der vorliegenden Beschreibung kann in axialer Richtung platzsparend gebaut werden, so dass bei einem seitlichen Abstand, der durch einen typischen Abstand von Pedalen vorgegeben ist, noch genügend Raum für ein Getriebe vorhanden ist.

Ähnliche Bauteile haben die gleichen Bezugsziffern wie in dem Ausführungsbeispiel der Figuren 15 und 22 oder mit Apostroph bezeichnete Bezugsziffern. Der Einfachheit halber sind nicht sämtliche Bauteile, die bereits in Fig. 26 bezeichnet wurden, erneut mit Bezugsziffern versehen.

Eine Ausgangswelle 190 ist konzentrisch außerhalb der Abtriebswelle 137 angeordnet und über ein Abtriebs-Kugellager 191 innerhalb des Motorgehäuses 175 gelagert. Ein Eingang des Getriebes 189 ist mit der Abtriebswelle 137 verbunden und ein Ausgang des Getriebes 189 ist mit der Ausgangswelle 190 verbunden. Vorzugsweise ist das Getriebe 189 als ein schaltbares Getriebe ausgeführt.

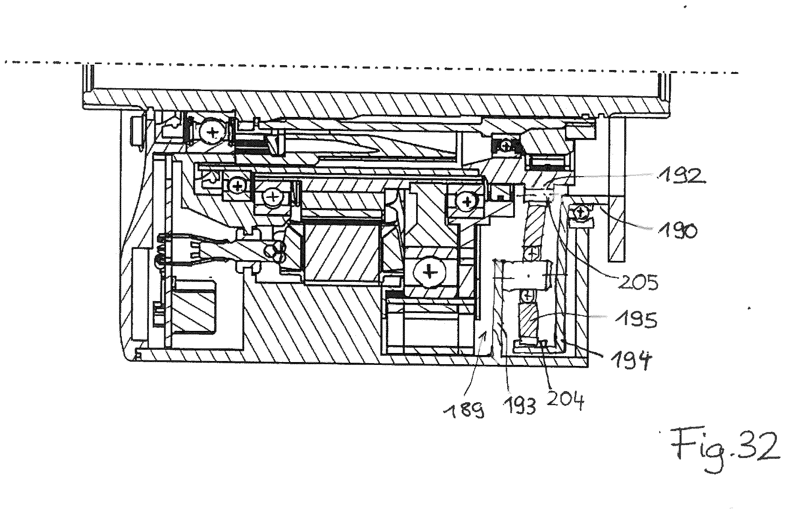

In den Figuren 32 bis 38 sind verschiedene Ausführungsformen gezeigt, bei denen das Getriebe 189 als ein Planetengetriebe ausgebildet ist.

Das Getriebe gemäß Fig. 31 weist gegenüber dem Getriebe von Fig. 26 - 30 Unterschiede in der Anordnung auf, die unter anderem dazu dienen, genügend Platz für den Bauraum 188 vorzusehen. Die Tretlagerwelle 111 ist auf der Antriebsseite über ein etwas größeres Kugellager 110 direkt am Gehäuse abgestützt.

An der Abtriebsseite ist bei dem Ausführungsbeispiel der Fig. 31 keine Abstützung des Innenrads 105 oder der Abtriebswelle 137 nach außen gezeigt. Das Innenrad 105 kann nach außen über eine Kugellager am Gehäuse 175 abgestützt sein, wie in Fig. 26 oder es kann an einem Getriebeteil des Getriebes 189 abgestützt sein. Ebenso kann die Abtriebswelle 137 über ein Kugellager an dem Motorgehäuse 175 oder an dem Gehäusedeckel 127 nach außen abgestützt sein oder es kann an einem Getriebeteil des Getriebes 189 nach außen abgestützt sein.

Anstatt zweier Tretwellenfreiläufe 142, 143 ist ein einzelner Tretwellen-Freilauf 142 vorgesehen. Die Messwelle 140 ist an der Abtriebsseite an der Tretwelle 111 befestigt und statt einer Gleitbuchse ist ein verbreiterter Auflagebereich für die Messwelle 140 an der Tretwelle 111 vorgesehen. Der Tretwellen-Freilauf liegt nicht direkt auf der Messwelle 140 auf, sondern es ist ein ringförmiges Bauteil zwischen der Messwelle und der Abtriebswelle 137 vorgesehen. Das abtriebsseitige Abtriebs-Kugellager 138' ist axial innerhalb des Tretwellen-Freilaufs 142 angeordnet.

Fig. 32 zeigt das harmonische Pinring-Getriebe von Fig. 31, wobei das Getriebe 189 als ein Planetengetriebe ausgebildet ist, bei dem

- ein Sonnenrad 192, das eine Außenverzahnung 205 aufweist, mit der Abtriebswelle 137 verbunden ist,
- ein Planetenträger 193, auf dem Planetenräder 195 gelagert sind, mit dem Motorgehäuse 175 verbunden ist,
- ein Hohlrad 194, das eine Innenverzahnung 204 aufweist, mit der Ausgangswelle 190 verbunden ist.

Ein schaltbares Getriebe 189 kann beispielsweise so ausgeführt sein, dass eine erste Kupplung zwischen dem Hohlrad 194 und dem Motorgehäuse 175 angeordnet ist und eine zweite Kupplung zwischen dem Sonnenrad 192 oder mit der Abtriebswelle 173 und dem Hohlrad 194 angeordnet ist. Durch Lösen der ersten Kupplung und Anziehen der zweiten Kupplung wird die Abtriebswelle 173 mit der Ausgangswelle 190 verbunden.

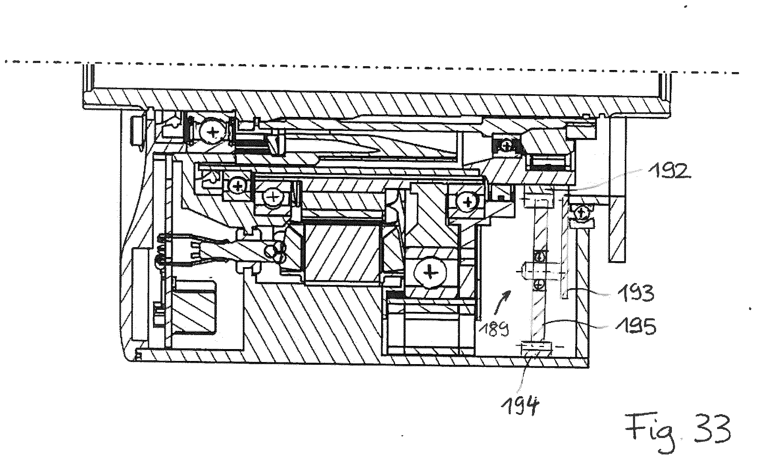

Fig. 33 zeigt das harmonische Pinring-Getriebe von Fig. 31, wobei das Getriebe 189 als ein Planetengetriebe ausgebildet ist, bei dem

- ein Sonnenrad 192 mit der Abtriebswelle 137 verbunden ist,
- ein Planetenträger 193, auf dem Planetenräder 195 gelagert sind, mit der Ausgangswelle 190 verbunden ist,
- ein Hohlrad 194 mit dem Motorgehäuse 175 verbunden ist.

Ein schaltbares Getriebe 189 kann beispielsweise so ausgeführt sein, dass eine erste Kupplung zwischen dem Planetenträger 193 und dem Motorgehäuse 175 angeordnet ist und eine zweite Kupplung zwischen dem Planetenträger 193 und dem Hohlrad 194 angeordnet ist. Durch Lösen der ersten Kupplung und Anziehen der zweiten Kupplung wird die Abtriebswelle 137 direkt mit der Ausgangswelle 190 verbunden.

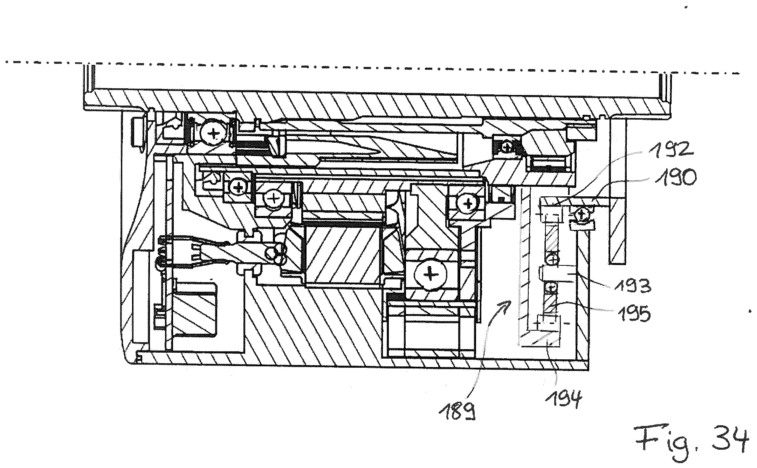

Fig. 34 zeigt das harmonische Pinring-Getriebe von Fig. 31, wobei das Getriebe 189 als ein Planetengetriebe ausgebildet ist, bei dem

- ein Sonnenrad 192 mit der Ausgangswelle 190 verbunden ist,
- ein Planetenträger 193, auf dem Planetenräder 195 gelagert sind, mit dem Motorgehäuse 175 verbunden ist,
- ein Hohlrad 194 mit der Abtriebswelle 137 verbunden ist.

Ein schaltbares Getriebe 189 kann beispielsweise so ausgeführt sein, dass eine erste Kupplung zwischen dem Planetenträger 193 und dem Motorgehäuse 175 angeordnet ist und eine zweite Kupplung zwischen dem Sonnenrad 192 und dem Hohlrad 194 angeordnet ist. Durch Lösen der ersten Kupplung und Anziehen der zweiten Kupplung wird die Abtriebswelle 137 direkt mit der Ausgangswelle 190 verbunden.

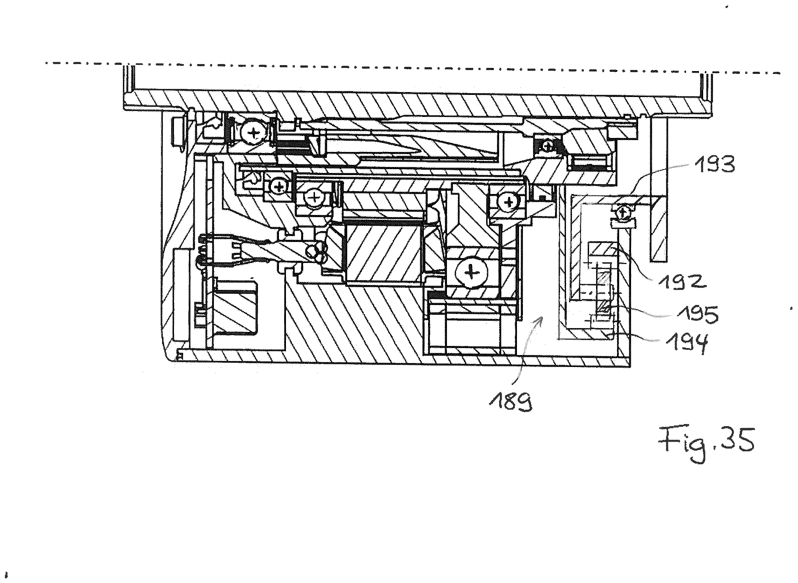

Fig. 35 zeigt das harmonische Pinring-Getriebe von Fig. 31, wobei das Getriebe 189 als ein Planetengetriebe ausgebildet ist, bei dem

- ein Sonnenrad 192 mit dem Motorgehäuse 175 verbunden ist,
- ein Planetenträger 193, auf dem Planetenräder 195 gelagert sind, mit der Ausgangswelle 190 verbunden ist,
- ein Hohlrad 194 mit der Abtriebswelle 137 verbunden ist.

Ein schaltbares Getriebe 189 kann beispielsweise so ausgeführt sein, dass eine erste Kupplung zwischen dem Sonnenrad 192 und dem Motorgehäuse 175 angeordnet ist und eine zweite Kupplung zwischen dem Planetenträger 193 und dem Hohlrad 194 angeordnet ist. Durch Lösen der ersten Kupplung und Anziehen der zweiten Kupplung wird die Abtriebswelle 173 direkt mit der Ausgangswelle 190 verbunden.

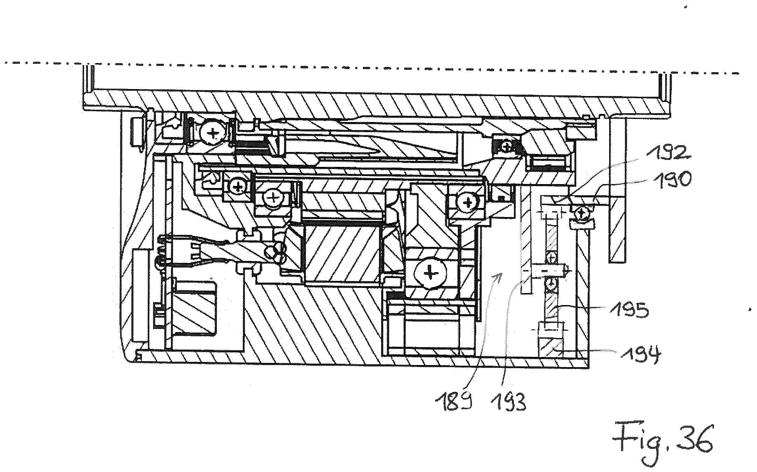

Fig. 36 zeigt das harmonische Pinring-Getriebe von Fig. 31, wobei das Getriebe 189 als ein Planetengetriebe ausgebildet ist, bei dem

- ein Sonnenrad 192 mit der Ausgangswelle 190 verbunden ist,
- ein Planetenträger 193, auf dem Planetenräder 195 gelagert sind, mit der Abtriebswelle 137 verbunden ist,
- ein Hohlrad 194 mit dem Motorgehäuse 175 verbunden ist.

Ein schaltbares Getriebe 189 kann beispielsweise so ausgeführt sein, dass eine erste Kupplung zwischen dem Hohlrad 194 192 und dem Motorgehäuse 175 angeordnet ist und eine zweite Kupplung zwischen dem Planetenträger 193 und dem Sonnenrad 192 angeordnet ist. Durch Lösen der ersten Kupplung und Anziehen der zweiten Kupplung wird die Abtriebswelle 173 direkt mit der Ausgangswelle 190 verbunden.

Fig. 37 zeigt das harmonische Pinring-Getriebe von Fig. 31, wobei das Getriebe 189 als ein Planetengetriebe ausgebildet ist, bei dem

- ein Sonnenrad 192 mit dem Motorgehäuse 175 verbunden ist,
- ein Planetenträger 193, auf dem Planetenräder 195 gelagert sind, mit der Ausgangswelle 190 verbunden ist,
- ein Hohlrad 194 mit der Abtriebswelle 137 verbunden ist.

Ein schaltbares Getriebe 189 kann beispielsweise so ausgeführt sein, dass eine erste Kupplung zwischen dem Sonnenrad 192 und dem Motorgehäuse 175 angeordnet ist und eine zweite Kupplung zwischen dem Hohlrad 194 und dem Sonnenrad 192 angeordnet ist. Durch Lösen der ersten Kupplung und Anziehen der zweiten Kupplung wird die Abtriebswelle 173 direkt mit der Ausgangswelle 190 verbunden.

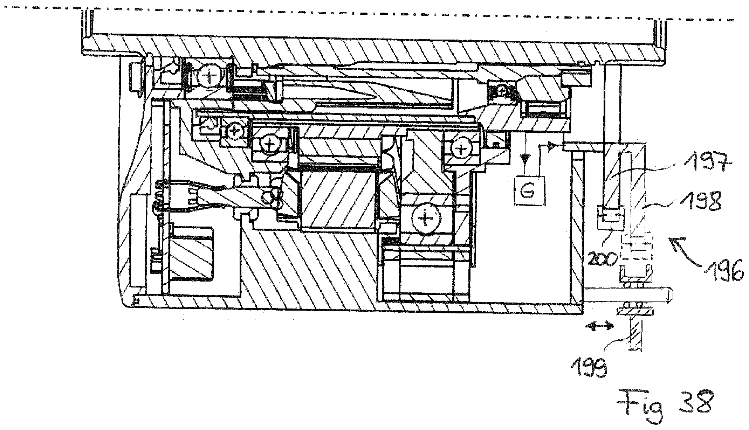

Fig. 38 zeigt das harmonische Pinring-Getriebe von Fig. 31 mit einem Getriebe 189, das beispielsweise als eines der oben beschriebenen Planetengetriebe oder auch als eine starre Verbindung ausgebildet sein kann, und einer Kettenschaltung 196. Die Kettenschaltung weist ein erstes Abtriebsritzel 197 und ein zweites Abtriebsritzel 198 auf, sowie einen Umwerfer 199 zum wahlweisen Verbinden einer Kette 200 mit dem ersten Abtriebsritzel 197 oder mit dem zweiten Abtriebsritzel 198.

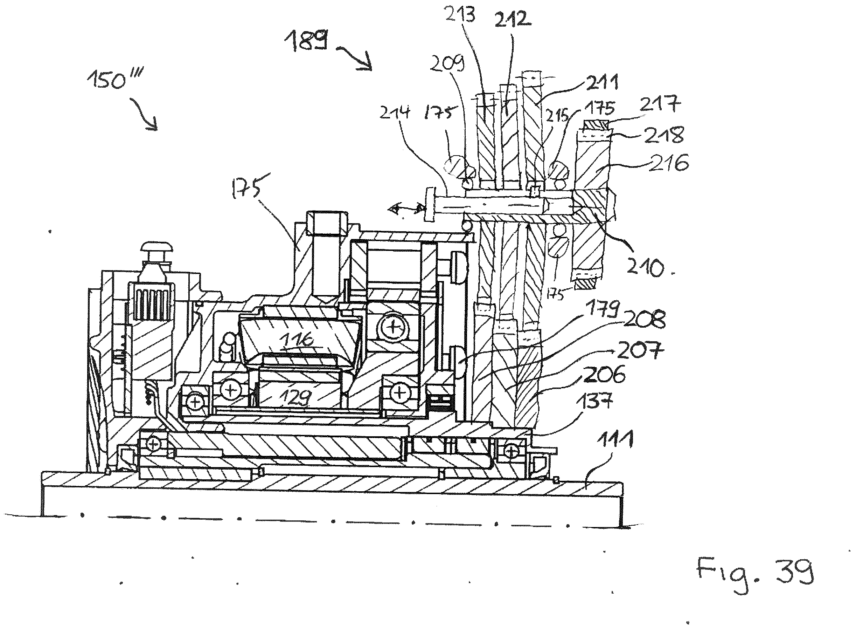

Fig. 39 zeigt ein harmonisches Pinring-Getriebe 150‴, das ähnlich zu dem Getriebe von Fig. 26 ist, bei dem die Abtriebsseite so gestaltet ist, dass ein weiteres Schaltgetriebe angeschlossen werden kann. In dem Ausführungsbeispiel von Fig. 39 ist ein Ziehkeilgetriebe 189 an die Abtriebswelle 137 angeschlossen, dass über einen Zahnriemen 217 mit einem Antriebsrad eines hier nicht gezeigten Fahrzeugs verbunden ist.

In Fig. 39 ist eine Lagerung 132' des Innenrads 105 und eine Lagerung 138' der Abtriebswelle 137 nicht gezeigt, diese entspricht den Lagerungen in den anderen Ausführungsbeispielen.

Ein Festrad 206 eines ersten Gangs, ein Festrad 207 eines zweiten Gangs und ein Festrad 208 eines dritten Gangs sind auf die Abtriebswelle aufgepresst. Eine Nebenwelle 210 ist über ein Kugellager 209 in dem Motorgehäuse 175 gelagert. Auf der Nebenwelle 210 sind ein Losrad 210 des ersten Gangs, ein Losrad 212 des zweiten Gangs und ein Losrad 213 des dritten Gangs angeordnet, wobei das Losrad 211 des ersten Gangs in das Festrad 206 des ersten Gangs eingreift, das Losrad 212 des zweiten Gangs in das Festrad 207 des zweiten Gangs eingreift und das Losrad 213 des dritten Gangs in das Festrad 208 des dritten Gangs eingreift. Zwischen den Losrädern 211, 212, 213 und er Nebenwelle 210 besteht eine Spielpassung oder, anders ausgedrückt, die inneren Durchmesser der Losräder 211, 212, 213 sind etwas größer als der Durchmesser der Nebenwelle 210, so dass die Losräder 211, 212, 213 auf der Nebenwelle 210 gleiten können.

Die Nebenwelle 210 ist von einem Ende her bis zu dem Bereich, in dem sich die Losräder 211, 212, 213 befinden, als Hohlwelle ausgestaltet, in der eine Ziehkeilwelle 214 axial verschiebbar angeordnet ist. Auf der Ziehkeilwelle 214 ist ein Ziehkeil 215 befestigt. Die Nebenwelle 210 weist in axialer Richtung einen Schlitz auf, in dem der Ziehkeil 215 in axialer Richtung beweglich ist. Der Ziehkeil 215 ist so dimensioniert, dass er eines der Losräder 211, 212, 213 reibschlüssig mit der Nebenwelle 210 verbindet, wenn der Ziehkeil 215 in einen Zwischenraum zwischen der Nebenwelle 210 und dem Losrad 211, 212, 213 bewegt wird.

Ein Ende der Ziehkeilwelle 214, das aus über die Nebenwelle 210 übersteht, ist mit einem nicht gezeigten Seilzug verbunden, der mit einem Aktuator und/oder mit einem Handschalthebel verbunden ist. Hierbei kann für den Seilzug ein weiteres Bauelement vorgesehen sein, das auf der Ziehkeilwelle 214 gleitet, so dass ein Drehmoment der Ziehkeilwelle 214 nicht auf den Seilzug übertragen wird.

An einem Ende der Nebenwelle 210, das der Ziehkeilwelle 214 gegenüberliegt, ist ein Abtriebsritzel 216 fest mit der Nebenwelle 210 verbunden. Ein Zahnriemen 217 greift in eine Zähnung des Abtriebsritzels 216 ein.

Durch Hin- und Herbewegen der Ziehkeilwelle 214 können die Losräder 211, 212 und 213 wahlweise mit der Nebenwelle 210 verbunden werden, in dem der Ziehkeil 215 in einen Zwischenraum zwischen dem jeweiligen Losrad 211, 212, 213 und der Nebenwelle 210 gedrückt wird.

Statt einem Ziehkeilgetriebe 189 können auch andere Schaltgetriebe 189 wie zum Beispiel Planetengetriebe an die Abtriebswelle 137 des harmonischen Pinring-Getriebes angeschlossen werden.

## Patentansprüche

1. Harmonisches Pinring-Getriebe (150) mit einer Eingangswelle und mit einer Ausgangswelle (190) wobei das harmonische Pinring-Getriebe (150) die folgenden Merkmale aufweist:

    - zwei Außenräder (106) mit je einer Innenverzahnung (126),
    - ein einziges Innenrad (105) mit einer Außenverzahnung (125), das konzentrisch zu einem ersten Außenrad (106) und in axialer Richtung im Innern des ersten Außenrads (106) angeordnet ist, sowie
    - ein sich zwischen den beiden Außenrädern (106) und dem Innenrad (105) erstreckendes Antriebsmittel, das einen in Umfangsrichtung einstückigen Pinring (103) und eine Vielzahl von Pins (101) aufweist, die von dem Pinring (103) in axialer Richtung seitlich überstehen,
    - ein umlaufender Transmitter zum Abheben des Antriebsmittels von der Außenverzahnung (125) des Innenrads (105) und zum Drücken des Antriebsmittels in die Innenverzahnungen (126) der Außenräder (106)
    - wobei das Innenrad (105) einen Innenrad-Halter (133) aufweist, der an dem Innenrad (105) befestigt ist, und wobei das Pinring-Getriebe (150) ein Innenrad-Wälzlager (132) aufweist, das radial nach innen an einem Getriebegehäuse abgestützt ist, wobei das Innenrad (105) und der Innenrad-Halter einen Außenring des Innenrad-Wälzlagers umgreifen.

2. Harmonisches Pinring Getriebe (150) gemäß Anspruch 1, wobei das Antriebsmittel am gesamten Umfang des Transmitters anliegt.

3. Harmonisches Pinring-Getriebe (150) gemäß Anspruch 2, wobei der Transmitter eine oval geformte Kurvenscheibe (104) und ein flexibles Dünnring-Wälzlager aufweist, wobei das flexible Dünnring-Wälzlager auf der ovalen Kurvenscheibe (104) aufliegt und wobei die Pins (101) auf einem Außenring des flexiblen Dünnring-Wälzlagers aufliegen.

4. Harmonisches Pinring-Getriebe (150) gemäß einem der vorhergehenden Ansprüche, wobei der Pinring (103) in axialer Richtung angeordnete, offene Nuten zur Aufnahme der Pins (101) aufweist, die an einer Innenseite des Pinrings (103) angeordnet sind.

5. Harmonisches Pinring-Getriebe (150) nach einem der vorhergehenden Ansprüche, wobei die Ausgangswelle (190) als Abtriebs-Hohlwelle ausgebildet ist, und das einen Freilauf aufweist, wobei der Freilauf zwischen der Abtriebs-Hohlwelle und einem inneren Bereich des Innenrads (105) angeordnet ist.

6. Harmonisches Pinring-Getriebe (150) nach Anspruch 5, das eine Kurbelwelle (111) und einen Kurbelwellen-Freilauf aufweist, wobei die Kurbelwelle (111) konzentrisch zur Abtriebs-Hohlwelle innerhalb der Abtriebshohlwelle angeordnet ist, und wobei der Kurbelwellen-Freilauf zwischen der Kurbelwelle (111) und der Abtriebs-Hohlwelle angeordnet ist.

7. Harmonisches Pinring-Getriebe (150) nach einem der vorhergehenden Ansprüche, das eine erste Anlaufscheibe (130, 131) und eine zweite Anlaufscheibe (130, 131) aufweist, wobei die erste Anlaufscheibe (130, 131) benachbart zu einer ersten axialen Seitenfläche der Pins (101) angeordnet ist, und wobei die zweite Anlaufscheibe (130, 131) benachbart zu einer gegenüberliegenden zweiten axialen Seitenfläche der Pins (101) angeordnet ist.

8. Harmonisches Pinring-Getriebe (150) nach einem der vorhergehenden Ansprüche, wobei eine Antriebswelle für den Transmitter auf einer Seite in dem Innenrad (105) gelagert ist, das wiederum im Gehäuse gelagert ist.

9. Harmonischer Pinring-Antrieb der eine Getriebe-Einheit mit einem harmonischen Pinring-Getriebe (150) nach einem der vorhergehenden Ansprüche aufweist und eine Motor-Einheit, wobei eine Rotorwelle (118) eines Motors der Motor-Einheit mechanisch mit der Kurvenscheibe (104) der Getriebe-Einheit verbunden ist.

10. Harmonischer Pinring-Antrieb gemäß Anspruch 9, wobei der Motor als ein Innenläufer-Motor ausgebildet ist.

11. Kraftfahrzeug mit einem harmonischen Pinring-Antrieb gemäß einem der Ansprüche 9 bis 10, wobei ein Antriebsrad des Kraftfahrzeugs mit der Ausgangswelle (190) des harmonischen Pinring-Antriebs verbunden ist.


**Claims**

1. Harmonic pin ring transmission (150) having an input shaft and an output shaft (190), the harmonic pin ring transmission (150) comprising the following features:

   - two outer gears (106), each having an internal toothing (126),
   - a single inner gear (105) having an external toothing (125), disposed concentrically with respect to a first outer gear (106) and inside the first outer gear (106) in an axial direction, and
   - a drive means extending between the two outer gears (106) and the inner gear (105) and comprising a pin ring (103) formed integrally in a circumferential direction and a plurality of pins (101) protruding laterally from the pin ring (103) in the axial direction,
   - a revolving transmitter for lifting the drive means from the external toothing (125) of the inner gear (105) and for pushing the drive means into the internal toothings (126) of the outer gears (106)
   - wherein the inner gear (105) comprises an inner gear holder (133) fixed to the inner gear (105) and wherein the pin ring transmission (150) comprises an inner gear rolling bearing (132) supported radially inwardly on a transmission housing, the inner gear (105) and the inner gear holder encompassing an outer ring of the inner gear rolling bearing.

2. Harmonic pin ring transmission (150) according to claim 1, wherein the drive means abuts on the entire circumference of the transmitter.

3. Harmonic pin ring transmission (150) according to claim 2, wherein the transmitter comprises an oval shaped cam disk (104) and a flexible thin ring rolling bearing, wherein the flexible thin ring rolling bearing rests on the oval shaped cam disk (104) and wherein the pins (101) rest on an outer ring of the flexible thin ring rolling bearing.

4. Harmonic pin ring transmission (150) according to any of the preceding claims, wherein the pin ring (103) comprises open grooves arranged in the axial direction for receiving the pins (101), which are arranged on an inner side of the pin ring (103).

5. Harmonic pin ring transmission (150) according to any of the preceding claims, wherein the output shaft (190) is formed as a hollow output shaft, and which comprises a freewheel, wherein the freewheel is arranged between the hollow output shaft and an inner portion of the inner gear (105).

6. Harmonic pin ring transmission (150) according to claim 5, comprising a crankshaft (111) and a crankshaft freewheel, wherein the crankshaft (111) is arranged concentrically to the hollow output shaft within the hollow output shaft, and wherein the crankshaft freewheel is arranged between the crankshaft (111) and the hollow output shaft.

7. Harmonic pin ring transmission (150) according to any of the preceding claims, comprising a first thrust disk (130, 131) and a second thrust disk (130, 131), wherein the first thrust disk (130, 131) is arranged adjacent to a first axial side face of the pins (101), and wherein the second thrust disk (130, 131) is arranged adjacent to an opposite second axial side face of the pins (101).

8. Harmonic pin ring transmission (150) according to any of the preceding claims, wherein a drive shaft for the transmitter is supported on one side in the inner gear (105), which in turn is supported in the housing.

9. Harmonic pin ring drive comprising a transmission unit having a harmonic pin ring transmission (150) according to any of the preceding claims and a motor unit, wherein a rotor shaft (118) of a motor of the motor unit is mechanically connected to the cam disk (104) of the transmission unit.

10. Harmonic pin ring drive according to claim 9, wherein the motor is formed as an internal rotor motor.

11. Motor vehicle having a harmonic pin ring drive according to any of claims 9 to 10, wherein a driven wheel of the motor vehicle is connected to the output shaft (190) of the harmonic pin ring drive.


**Revendications**

1. Engrenage harmonique à bague de broche (150) ayant un arbre d'entrée et un arbre de sortie (190), l'engrenage harmonique à bague de broche (150) comprenant les caractéristiques suivantes :

   - deux roues extérieures (106), chacune avec une denture intérieure (126),
   - une seule roue intérieure (105) avec une denture extérieure (125), disposée concentriquement avec une première roue extérieure (106) et à l'intérieur de la première roue extérieure (106) dans une direction axiale, et
   - un moyen d'entraînement s'étendant entre les deux roues extérieures (106) et la roue intérieure (105), comprenant une bague de broche (103) formée intégralement dans une direction circonférentielle et une pluralité de broches (101) faisant saillie latéralement de la bague de broche (103) dans la direction axiale,
   - un transmetteur rotatif pour soulever le moyen d'entraînement de la denture extérieure (125) de la roue intérieure (105) et pour pousser le moyen d'entraînement dans les dentures intérieures (126) des roues extérieures (106)
   - dans lequel la roue intérieure (105) comprend un support de roue intérieure (133) fixé à la roue intérieure (105), et dans lequel l'engrenage à bague de broche (150) comprend un roulement de roue intérieure (132) supporté radialement vers l'intérieur sur un boîtier de transmission, la roue intérieure (105) et le support de roue intérieure entourant une bague extérieure du roulement de roue intérieure.

2. Engrenage harmonique à bague de broche (150) selon la revendication 1, dans lequel le moyen d'entraînement touche à toute la circonférence du transmetteur.

3. Engrenage harmonique à bague de broche (150) selon la revendication 2, dans lequel le transmetteur comprend une came disque (104) de forme ovale et un roulement à bague mince flexible, dans lequel le roulement à bague mince flexible repose sur la came disque (104) de forme ovale et dans lequel les broches (101) reposent sur une bague extérieure du roulement à bague mince flexible.

4. Engrenage harmonique à bague de broche (150) selon l'une quelconque des revendications précédentes, dans lequel la bague de broche (103) comprend des rainures ouvertes disposées dans la direction axiale pour recevoir les broches (101), qui sont disposées sur une face interne de la bague de broche (103).

5. Engrenage harmonique à bague de broche (150) selon l'une quelconque des revendications précédentes, dans lequel l'arbre de sortie (190) est formé comme un arbre creux de sortie, et qui comprend une roue libre, la roue libre étant disposée entre l'arbre creux de sortie et une partie intérieure de la roue intérieure (105).

6. Engrenage harmonique à bague de broche (150) selon la revendication 5, comprenant un vilebrequin (111) et une roue libre de vilebrequin, dans lequel le vilebrequin (111) est disposé concentriquement avec l'arbre creux de sortie à l'intérieur de l'arbre creux de sortie, et dans lequel la roue libre de vilebrequin est disposée entre le vilebrequin (111) et l'arbre creux de sortie.

7. Engrenage harmonique à bague de broche (150) selon l'une quelconque des revendications précédentes, comprenant un premier disque de démarrage (130, 131) et un second disque de démarrage (130, 131), dans lequel le premier disque de démarrage (130, 131) est disposé de manière adjacente à une première face latérale axiale des broches (101), et dans lequel le second disque de démarrage (130, 131) est disposé de manière adjacente à une seconde face latérale axiale opposée des broches (101) .

8. Engrenage harmonique à bague de broche (150) selon l'une quelconque des revendications précédentes, dans lequel un arbre d'entraînement pour le transmetteur est supporté sur un côté dans la roue intérieure (105), qui à son tour est supportée dans le boîtier.

9. Entraînement harmonique à bague de broche comprenant un dispositif d'engrenage comprenant un engrenage harmonique à bague de broche (150) selon l'une quelconque des revendications précédentes et un dispositif de moteur, dans lequel un arbre de rotor (118) d'un moteur du dispositif de moteur est relié mécaniquement à la came disque (104) du dispositif d'engrenage.

10. Entraînement harmonique à bague de broche selon la revendication 9, dans lequel le moteur est formé comme un moteur à rotor interne.

11. Véhicule automobile comprenant un entraînement harmonique à bague de broche selon l'une quelconque des revendications 9 à 10, dans lequel une roue motrice du véhicule automobile est reliée à l'arbre de sortie (190) de l'entraînement harmonique à bague de broche.

Fig. 1

Fig. 2

Fig. 3

A-A ( 1:1 )

EP 3 929 469 B1

Fig. 4

Fig. 5

Fig. 6

EP 3 929 469 B1

Fig. 7

Fig. 8

Fig. 9

Fig. 10

Fig. 11

Fig. 12

Fig. 13

(1) Untersetzung festlegen

(2) Abtrieb festlegen

(3) Untersetzung und Zähnezahlen Zi, Za festlegen

(4) Anzahl der Pins bestimmen

(5) Pindurchmesser bestimmen

(6) Teilungen festlegen

(7) Bogenlänge der Laufbahn ausrechnen

(8) Form der Laufbahn auswählen

(9) Laufbahn ausrechnen

(10) Kugellager-form bestimmen

(13) Zahnform bestimmen

(11) Rotorform bestimmen

(12) Pin-Ringform bestimmen

Fig. 14

Fig. 15

Fig. 16

C-C

Fig. 18

Fig. 17

Fig. 19

Fig. 20

Fig. 21

Fig. 22

Fig. 23

Fig. 24

EP 3 929 469 B1

Fig. 25

Fig 26

Fig 27

Fig 28

Fig. 29

Fig. 30

150"

175  106'  178  106

105

102

104

116

129

191

111

140

G

189

188

Fig.31

Fig.32

Fig. 33

Fig. 34

Fig.35

EP 3 929 469 B1

Fig. 36

Fig. 37

EP 3 929 469 B1

Fig 38

EP 3 929 469 B1

Fig. 39

**IN DER BESCHREIBUNG AUFGEFÜHRTE DOKUMENTE**

**In der Beschreibung aufgeführte Patentdokumente**

- US 20090139358 A
- WO 20120462126 A
- AT 372767
- WO 20101131115 A
- WO 2012046216 A